# EUROPÄISCHE PATENTSCHRIFT

(11) **EP 4 456 224 B1**
(45) Veröffentlichungstag und Bekanntmachung des Hinweises auf die Patenterteilung: **10.12.2025**
(21) Anmeldenummer: 23184280.8
(22) Anmeldetag: 07.07.2023
(51) Int. Cl.: H01M 10/04

(54) **BATTERIEZELLSTAPELHERSTELLVERFAHREN, BATTERIEZELLSTAPELHERSTELLVORRICHTUNG UND COMPUTERPROGRAMM**
BATTERY CELL STACK PRODUCTION METHOD, BATTERY CELL STACK PRODUCTION DEVICE, AND COMPUTER PROGRAM
PROCÉDÉ DE FABRICATION D'EMPILEMENT DE PILES DE BATTERIES, DISPOSITIF DE FABRICATION D'EMPILEMENT DE PILES DE BATTERIES ET PROGRAMME INFORMATIQUE

(30) Priorität: 27.04.2023 DE 102023110844
(43) Veröffentlichungstag der Anmeldung: 30.10.2024
(73) Patentinhaber: Grob-Werke GmbH & Co. KG, 87719 Mindelheim (DE)
(72) Erfinder: Pfitzmaier, Thomas, 86514 Ustersbach (DE); Paul, Jürgen, 87739 Loppenhausen (DE); Fritz, Alexander, 89297 Schießen (DE)
(74) Vertreter: KASTEL Patentanwälte PartG mbB

(56) Entgegenhaltungen:
- EP-A1- 4 109 613
- DE-A1- 102021 207 357

## Beschreibung

Die Erfindung betrifft ein Batteriezellstapelherstellverfahren zum Herstellen von Batteriezellstapeln. Weiter betrifft die Erfindung eine Batteriezellstapelherstellvorrichtung zum Herstellen von Batteriezellstapeln sowie ein Computerprogramm hierfür.

Die Erfindung liegt insbesondere auf dem Gebiet der automatisierten und computergestützt gesteuerten Herstellung von Monozellen und Batteriestapeln aus derartigen Monozellen.

Zum technologischen Hintergrund wird auf folgende Literaturstellen verwiesen:
[1] WO 2020/192 845 A1
[2] DE 10 2017 216 156 A1

Aus [1] sind Verfahren und Vorrichtungen zur Bereitstellung von Elektrodensträngen sowie zur Herstellung von Monozellen und daraus gebildeten Batteriestapeln bekannt. Insbesondere beschreibt [1] eine Anlage zur Produktion von Batteriezellen, bei der als Elektrodenstränge ein Anodenstrang mit auf einem ersten bahnförmigen Separator (S) angebrachten Anoden (A) und ein Kathodenstrang mit auf einem zweiten bahnförmigen Separator (S) angebrachten Kathoden (K) bereitgestellt werden, wobei daraus ein Strangverbund gebildet wird, von dem Monozellen vereinzelt werden. Im Gegensatz zum Verfahren des Z-Faltens von Batteriezellen handelt es sich hierbei um einen kontinuierlichen Prozess. Der Vorteil liegt hierbei in der höheren Ausbringung aufgrund eines kontinuierlichen Verfahrens. Hierzu werden in der Anlage in der nachfolgenden Reihenfolge Separator, Anode, Separator, Kathode (SASK) miteinander laminiert. Durch Stapeln von vereinzelten SASK-Lagen entsteht die Grundlage der Batteriezelle.

In der Literaturstelle [2] wird ein Verfahren zur Herstellung von Monozellen beschrieben, bei dem der Separator zunächst auf ein Vakuumband angesaugt wird. Parallel hierzu werden Elektroden auf einer Trommel angesaugt und durch einen Laser vereinzelt. Die vereinzelte Elektrode wird auf den Separator übergeben und durch diesen hindurch auf das Vakuumband angesaugt. Hierauf wird ein zweiter Separator aufgebracht und anschließend an ein Transportsystem mit auf einer Führungsbahn einzeln beweglichen Transporteinheiten (zuweilen auch Moversystem genannt) übergeben. Hier wird die Separatorbahn geschnitten und eine weitere Elektrode, die wie die erste bereitgestellt wird, aufgelegt. Das Paket wird mechanisch geklemmt und zur Abwurfstelle transportiert.

Die Erfindung hat sich zur Aufgabe gestellt, hinsichtlich Prozesszeit, Aufwand und Prozessführung verbesserte Verfahren und Vorrichtungen zur Herstellung von aus Monozellen gebildeten Batteriezellstapeln in industrieller Großserienfertigung bereitzustellen.

Zum Lösen dieser Aufgabe schafft die Erfindung ein Batteriezellstapelherstellverfahren nach Anspruch 1 und eine Batteriezellstapelherstellvorrichtung nach dem Nebenanspruch. Ein Computerprogramm hierfür ist in dem weiteren Nebenanspruch angegeben.

Vorteilhafte Ausgestaltungen sind Gegenstand der Unteransprüche.

Die Erfindung schafft gemäß einem Aspekt davon ein Batteriezellstapelherstellverfahren zum Herstellen von Batteriezellstapeln, umfassend:
a) Herstellen eines ersten Elektrodenstrangs, wobei an einer ersten Separatorbahn erste Elektroden in einem vorbestimmten Abstand zueinander befestigt werden, um eine Reihe aufeinanderfolgender erster Elektrodenhalbzellabschnitte mit einer vorbestimmten Länge zu bilden, so dass jeder erste Elektrodenhalbzellabschnitt aus einem Längenabschnitt der ersten Separatorbahn und einer ersten Elektrode gebildet ist,
b) Herstellen eines zweiten Elektrodenstrangs, wobei an einer zweiten Separatorbahn zweite Elektroden, die Gegenelektroden zu den ersten Elektroden sind, in einem vorbestimmten Abstand zueinander befestigt werden, um eine Reihe von zweiten Elektrodenhalbzellabschnitten mit der gleichen vorbestimmten Länge wie die ersten Elektrodenhalbzellabschnitte zu bilden, so dass jeder zweite Elektrodenhalbzellabschnitt aus einem Längenabschnitt der zweiten Separatorbahn und einer zweiten Elektrode gebildet ist,
c) Bilden eines Zellverbundstrangs durch Ausrichten und aneinander Befestigen des ersten Elektrodenstrangs und des zweiten Elektrodenstrangs derart, dass in aufeinanderfolgenden Längenabschnitten in dem Zellverbundstrang jeweils ein erster Elektrodenhalbzellabschnitt und ein zweiter Elektrodenhalbzellabschnitt aufeinanderliegen, um eine Reihe von Monozellenbereichen zu bilden, die jeweils einen Schichtaufbau aus einem Längenabschnitt der einen der ersten und zweiten Separatorbahn, der einen der ersten und zweiten Elektrode, einem Längenabschnitt der anderen der ersten und zweiten Separatorbahn und der anderen der ersten und zweiten Elektrode aufweisen,
d) Vereinzeln der Längenabschnitte des Zellverbundstrangs, um die Monozellenbereiche zu Monozellen zu vereinzeln, die einen Schichtaufbau aus Separator, der einen der ersten und zweiten Elektrode, Separator und der anderen der ersten und zweiten Elektrode aufweisen, und
e) Stapeln mehrerer Monozellen aufeinander, um einen Batteriezellstapel mit sich wiederholendem Schichtaufbau Separator - eine der ersten und zweiten Elektrode - Separator - andere der ersten und zweiten Elektrode zu bilden,
wobei Schritt b) umfasst:
b1) Weglassen einer zweiten Elektrode an mehreren Stellen, so dass jeweils ein Leerabschnitt mit der gleichen vorbestimmten Länge wie der erste Elektrodenhalbzellabschnitt entsteht, der aus einem Längenabschnitt der zweiten Separatorbahn ohne zweite Elektrode gebildet ist,
wobei Schritt c) umfasst:
   c1) Ausrichten jedes Leerabschnitts mit einem ersten Elektrodenhalbzellabschnitt, so dass in dem Zellverbundstrang an den mehreren Stellen jeweils ein Abschlusszellenbereich entsteht, der einen Schichtaufbau aus dem Längenabschnitt der ersten Separatorbahn, der ersten Elektrode und dem Längenabschnitt der zweiten Separatorbahn, jedoch keine zweite Elektrode aufweist,
   wobei Schritt d) umfasst:
      d1) Vereinzeln der Abschlusszellenbereiche von dem Zellverbundstrang, um Abschlusszellen zu erhalten, die einen Schichtaufbau aus Separator, erster Elektrode und Separator aufweist,
      und wobei Schritt e) umfasst:
         Beginnen oder Enden des Stapelns mit einer in Schritt d1) erhaltenen Abschlusszelle, so dass jeder Batteriezellstapel an jedem Ende mit einer ersten Elektrode und einem Separator abschließt.

Vorzugsweise umfasst Schritt e) den Schritt:
e1) Bilden mehrerer Batteriezellstapel an mehreren Stapelplätzen, die in einer Transportrichtung der Mono- und Abschlusszellen hintereinander angeordnet sind.

Vorzugsweise umfasst Schritt e) den Schritt:
e2) Beginnen eines jeden Batteriezellstapels mit einer Abschlusszelle.

Vorzugsweise umfasst Schritt e) den Schritt:
e3) Erfassen der Anzahl von Zellen an jedem Stapelplatz.

Vorzugsweise umfasst Schritt b1) den Schritt:
b1a) flexibles Erzeugen eines Leerabschnittes auf einen Steuerbefehl hin.

Vorzugsweise umfasst Schritt b1) den Schritt:
b1b) Erzeugen von Leerabschnitten abhängig von einer Anzahl von Zellen in einem oder mehreren der in Schritt e) entstehenden Batteriezellstapeln.

Vorzugsweise umfasst Schritt b1) den Schritt:
b1c) Erzeugen von Leerabschnitten abhängig von einem Füllgrad von Stapelplätzen.

Es ist bevorzugt, dass Schritt b) Bereitstellen der zweiten Elektroden durch Vereinzeln von einem bahnförmigen Zweite-Elektrodensubstrat umfasst und dass Schritt a) Bereitstellen der ersten Elektroden durch Vereinzeln von einem bahnförmigen Erste-Elektrodensubstrat umfasst und dass eine Geschwindigkeit, mit der das bahnförmige Zweite-Elektrodensubstrat zum Bereitstellen der zweiten Elektroden angeliefert wird, geringer ist als eine Geschwindigkeit, mit der das bahnförmige Erste-Elektrodensubstrat zum Bereitstellen der ersten Elektroden angeliefert wird.

Es ist bevorzugt, dass Schritt b) umfasst:
b2) Bereitstellen der zweiten Elektroden mittels eines flexiblen Zweite-Elektroden-Transportsystems, das entlang einer Führungsbahn einzeln bewegbare Transporteinheiten aufweist, auf denen jeweils eine zweite Elektrode transportiert wird,
und dass Schritt b1) umfasst:
   b2.1) Zurückhalten einer Transporteinheit, um den Leerabschnitt zu bilden.

Es ist bevorzugt, dass Schritt b) die folgende Reihenfolge von Schritten umfasst:
b-a) Bereitstellen eines bahnförmigen Zweite-Elektrodensubstrats;
b-b) Aufnehmen des bahnförmigen Zweite-Elektrodensubstrats mittels des Zweite-Elektroden-Transportsystems und Transportieren des Zweite-Elektrodensubstrats zu einer Zweite-Elektroden-Schneideinrichtung;
b-c) Schneiden des bahnförmigen Zweite-Elektrodensubstrats in der Zweite-Elektroden-Schneideinrichtung, um zweite Elektroden abzuschneiden, die jeweils einzeln auf einer der Transporteinheiten angeordnet sind;
b-d) Einstellen eines Abstands zwischen abgeschnittenen zweiten Elektroden mittels Relativbewegung der Transporteinheiten, um die zweiten Elektroden relativ zueinander zu positionieren;
b-e) Bereitstellen der zweiten Separatorbahn;
b-f) Aufbringen und Fixieren der relativ zueinander positionierten zweiten Elektroden auf der zweiten Separatorbahn.

Es ist bevorzugt, dass Schritt a) die folgende Reihenfolge von Schritten umfasst:
a-a) Bereitstellen eines bahnförmigen Erste-Elektrodensubstrats;
a-b) Aufnehmen des bahnförmigen Erste-Elektrodensubstrats mittels eines flexiblen Erste-Elektroden-Transportsystems, das entlang einer Führungsbahn einzeln bewegbare Transporteinheiten aufweist, und Transportieren des Erste-Elektrodensubstrats zu einer Erste-Elektroden-Schneideinrichtung;
a-c) Schneiden des bahnförmigen Erste-Elektrodensubstrats in der Erste-Elektroden-Schneideinrichtung, um erste Elektroden abzuschneiden, die jeweils einzeln auf einer der Transporteinheiten des Erste-Elektroden-Transportsystems angeordnet sind;
a-d) Einstellen eines Abstands zwischen abgeschnittenen ersten Elektroden mittels Relativbewegung der Transporteinheiten, um die ersten Elektroden relativ zueinander zu positionieren;
a-e) Bereitstellen der ersten Separatorbahn;
a-f) Aufbringen und Fixieren der relativ zueinander positionierten ersten Elektroden auf der ersten Separatorbahn.

Bei einigen Ausführungsformen sind die ersten Elektroden Anoden und die zweiten Elektroden Kathoden. Bei anderen Ausführungsformen sind die ersten Elektroden Kathoden und die zweiten Elektroden Anoden.

Gemäß einem weiteren Aspekt schafft die Erfindung eine Batteriezellstapelherstellvorrichtung zum Herstellen von Batteriezellstapeln, umfassend:
eine computergesteuerte erste Elektrodenstrangherstelleinrichtung zum Herstellen eines ersten Elektrodenstrangs, die dazu ausgebildet ist, an einer ersten Separatorbahn erste Elektroden im vorbestimmten Abstand zueinander zu befestigen, um eine Reihe aufeinanderfolgender erster Elektrodenhalbzellabschnitte mit einer vorbestimmten Länge zu bilden, so dass jeder erste Elektrodenhalbzellabschnitt aus einem Längenabschnitt des ersten Separators und einer ersten Elektrode gebildet ist,
eine computergesteuerte zweite Elektrodenstrangherstelleinrichtung zum Herstellen eines zweiten Elektrodenstrangs, die dazu ausgebildet ist, an einer zweiten Separatorbahn zweite Elektroden, die Gegenelektroden zu den ersten Elektroden sind, in einem vorbestimmten Abstand zueinander zu befestigten, um eine Reihe von zweiten Elektrodenhalbzellabschnitten mit der gleichen vorbestimmten Länge wie die ersten Elektrodenhalbzellabschnitte zu bilden, so dass jeder zweite Elektrodenhalbzellabschnitt aus einem Längenabschnitt der zweiten Separatorbahn und einer zweiten Elektrode gebildet ist,
eine computergesteuerte Strangverbindungseinrichtung, die dazu ausgebildet ist, einen Zellverbundstrang durch Ausrichten und aneinander Befestigen des ersten Elektrodenstrangs und des zweiten Elektrodenstrangs derart zu bilden, dass in aufeinanderfolgenden Längenabschnitten in dem Zellverbundstrang jeweils ein erster Elektrodenhalbzellabschnitt und ein zweiter Elektrodenhalbzellabschnitt aufeinanderliegen, um eine Reihe von Monozellenbereiche zu bilden, die jeweils einen Schichtaufbau aus einem Längenabschnitt der einen der ersten und zweiten Separatorbahn, der einen der ersten und zweiten Elektrode, einem Längenabschnitt der anderen der ersten und zweiten Separatorbahn und der anderen der ersten und zweiten Elektrode aufweisen,
eine Zellverbund-Vereinzelungseinrichtung zum Vereinzeln der Längenabschnitte des Zellverbundstrangs, um die Monozellenbereiche zu Monozellen zu vereinzeln, die einen Schichtaufbau aus Separator, der einen der ersten und zweiten Elektrode, Separator und der anderen der ersten und zweiten Elektrode aufweisen, und
eine computergesteuerte Stapeleinrichtung, die dazu ausgebildet ist, mehrere Monozellen aufeinander zu stapeln, um einen Batteriezellstapel mit sich wiederholendem Schichtaufbau Separator - eine der ersten und zweiten Elektrode - Separator - andere der ersten und zweiten Elektrode zu bilden, wobei die zweite Elektrodenstrangherstelleinrichtung dazu ausgebildet ist, eine zweite Elektrode an mehreren Stellen wegzulassen, so dass jeweils ein Leerabschnitt mit der gleichen vorbestimmten Länge wie der erste Elektrodenhalbzellabschnitt entsteht, der aus einem Längenabschnitt der zweiten Separatorbahn ohne zweite Elektrode gebildet ist,
wobei die Strangverbindungseinrichtung dazu ausgebildet ist, jeden Leerabschnitt mit einem ersten Elektrodenhalbzellabschnitt auszurichten, so dass in dem Zellverbundstrang an den mehreren Stellen jeweils ein Abschlusszellenbereich entsteht, der einen Schichtaufbau aus dem Längenabschnitt der ersten Separatorbahn, der ersten Elektrode und dem Längenabschnitt der zweiten Separatorbahn, jedoch keine zweite Elektrode aufweist,
wobei die Zellverbund-Vereinzelungseinrichtung dazu ausgebildet ist, die Abschlusszellenbereiche von dem Zellverbundstrang zu vereinzeln, um Abschlusszellen zu erhalten, die einen Schichtaufbau aus Separator, erster Elektrode und Separator aufweist, und
wobei die Stapeleinrichtung dazu ausgebildet ist, das Stapeln jedes Zellstapels mit einer Abschlusszelle zu beginnen oder zu beenden, so dass jeder Batteriezellstapel an jedem Ende mit einer ersten Elektrode und einem Separator abschließt.

Es ist bevorzugt, dass die Stapeleinrichtung mehrere Stapelplätze aufweist, die in einer Transportrichtung der Mono- und Abschlusszellen hintereinander angeordnet sind.

Es ist bevorzugt, dass die Stapeleinrichtung eine Zellenerfassungs- und -zähleinrichtung zum Erfassen der Anzahl von Zellen an einem oder mehreren Stapelplätzen aufweist.

Vorzugsweise ist die zweite Elektrodenstrangherstelleinrichtung ausgebildet zum flexiblen Erzeugen eines Leerabschnittes auf einen Steuerbefehl hin.

Vorzugsweise ist die zweite Elektrodenstrangherstelleinrichtung ausgebildet zum Erzeugen von Leerabschnitten abhängig von einer Anzahl von Zellen in einem oder mehreren der durch die Stapeleinrichtung gebildeten Batteriezellstapeln.

Vorzugsweise ist die zweite Elektrodenstrangherstelleinrichtung ausgebildet zum Erzeugen von Leerabschnitten abhängig von einem Füllgrad von Stapelplätzen der Stapeleinrichtung.

Es ist bevorzugt, dass die erste Elektrodenstrangherstelleinrichtung eine erste Elektrodenbahnliefereinrichtung zum Anliefern eines bahnförmigen ersten Elektrodensubstrats aufweist und die zweite Elektrodenstrangherstelleinrichtung eine zweite Elektrodenbahnliefereinrichtung zum Anliefern eines bahnförmigen zweiten Elektrodensubstrats aufweist, wobei die erste Elektrodenstrangherstelleinrichtung und die zweite Elektrodenstrangherstelleinrichtung derart gesteuert sind, dass das erste Elektrodensubstrat mit einer höheren Geschwindigkeit als das zweite Elektrodensubstrat angeliefert wird.

Es ist bevorzugt, dass die zweite Elektrodenstrangherstelleinrichtung ein flexibles Zweite-Elektroden-Transportsystem mit entlang einer Führungsbahn einzeln bewegbaren Transporteinheiten zum Transportieren jeweils einer zweiten Elektrode aufweist und dazu eingerichtet ist, einen Leerabschnitt durch Zurückhalten einer Transporteinheit zu bilden.

Vorzugsweise hat die zweite Elektrodenstrangherstelleinrichtung
eine Zweite-Elektrodensubstratbereitstelleinrichtung zum Bereitstellen eines bahnförmigen zweiten Elektrodensubstrats;
ein Zweite-Elektroden-Transportsystem, das entlang einer Führungsbahn einzeln bewegbare Transporteinheiten aufweist, wobei das Zweite-Elektroden-Transportsystem dazu eingerichtet ist, das von der Zweite-Elektrodensubstratbereitstelleinrichtung bereitgestellte bahnförmige zweite Elektrodensubstrat aufzunehmen und zu bewegen;
eine Zweite-Elektroden-Schneideinrichtung zum Schneiden des zweiten Elektrodensubstrats entlang einer Schneidkontur, um zweite Elektroden von dem zweiten Elektrodensubstrat abzuschneiden;
eine Zweite-Separatorbahnbereitstelleinrichtung zum Bereitstellen der zweiten Separatorbahn; und
eine Zweite-Elektroden-Aufbring- und Fixiereinrichtung zum Aufbringen und Fixieren von mittels des Zweite-Elektroden-Transportsystems relativ zueinander positioniert angelieferten zweiten Elektroden auf der zweiten Separatorbahn.

Vorzugsweise hat die erste Elektrodenstrangherstelleinrichtung
eine Erste-Elektrodensubstratbereitstelleinrichtung zum Bereitstellen eines bahnförmigen ersten Elektrodensubstrats;
ein Erste-Elektroden-Transportsystem, das entlang einer Führungsbahn einzeln bewegbare Transporteinheiten aufweist, wobei das Erste-Elektroden-Transportsystem dazu eingerichtet ist, das von der Erste-Elektrodensubstratbereitstelleinrichtung bereitgestellte bahnförmige erste Elektrodensubstrat aufzunehmen und zu bewegen;
eine Erste-Elektroden-Schneideinrichtung zum Schneiden des ersten Elektrodensubstrats entlang einer Schneidkontur, um erste Elektroden von dem ersten Elektrodensubstrat abzuschneiden;
eine Erste-Separatorbahnbereitstelleinrichtung zum Bereitstellen der ersten Separatorbahn; und
eine Erste-Elektroden-Aufbring- und Fixiereinrichtung zum Aufbringen und Fixieren von mittels des Erste-Elektroden-Transportsystems relativ zueinander positioniert angelieferten ersten Elektroden auf der ersten Separatorbahn.

Vorzugsweise weist die Batteriezellstapelherstellvorrichtung nach einer der voranstehenden Ausgestaltungen eine Steuerung auf, die dazu eingerichtet ist, die Batteriezellstapelherstellvorrichtung zum Durchführen des Batteriezellstapelherstellverfahrens nach einer der voranstehenden Ausgestaltungen durchzuführen.

Gemäß einem weiteren Aspekt schafft die Erfindung ein Computerprogramm umfassend Anweisungen, die eine Batteriezellstapelherstellvorrichtung nach einer der voranstehenden Ausgestaltungen veranlassen, das Batteriezellstapelherstellverfahren nach einer der voranstehenden Ausgestaltungen durchzuführen.

Bevorzugte Ausführungsformen der Erfindung betreffen ein Verfahren zur Inline-Einschleusung einer Halbzelle bei der Stapelbildung von Batteriezellen mit Monozellen.

Ausgestaltungen der Erfindung finden insbesondere auf dem Gebiet der Elektromobilität und dort insbesondere bei der Großserienproduktion von Batterien für Elektrofahrzeug Verwendung.

Die Erfindung liegt auf dem technischen Gebiet der Herstellung von Batteriezellen. Batteriezellen werden insbesondere durch Aufeinanderstapeln von Monozellen, die beispielsweise eine Schichtfolge Separator (S) - Anode (A) - Separator (S) - Kathode (K) oder kurz SASK aufweisen. Bei einigen Ausführungsformen können auch Monozellen mit der Schichtfolge SKSA aufeinandergestapelt werden.

Nach dem aktuellen Stand der Technik enden die Batterien bei einigen Ausgestaltungen an beiden Enden mit einer Anordnung aus Separator und Anode, um die Kapazität zu maximieren. Bei einigen Batteriekonstruktionen kann es auch vorteilhaft sein, dass die Batterie an beiden Enden mit einer Anordnung aus Separator und Kathode endet.

Im Folgenden werden Ausgestaltungen der Erfindung am Beispiel der Herstellung aus Monozellen mit einem Schichtaufbau SASK und mit Abschlusszellen mit dem Schichtaufbau SAS beschrieben. Zur Herstellung solcher Monozellen mit SASK wird dann ein Anodenstrang als erster Elektrodenstrang mit einem ersten bahnförmigen Separator und daran mit Abstand angeordneten Anoden (Beispiel für erste Elektroden) bereitgestellt, weiter wird als zweiter Elektrodenstrang ein Kathodenstrang mit einem zweiten bahnförmigen Separator und daran mit Abstand zueinander angeordneten Kathoden (Beispiel für die zweiten Elektroden) bereit gestellt, diese Elektrodenstränge werden zu einem Verbundstrang verbunden, dann werden die Monozellen davon vereinzelt und gestapelt. Die Herstellung von Monozellen mit SKSA-Schichtaufbau mit Abschlusszellen SKS gemäß weiterer Ausführungsbeispiele der Erfindung erfolgt analog, wobei die Kathoden und die Anoden lediglich vertauscht sind.

Während des normalen Herstellungsprozess werden bei der beispielhaften Ausgestaltung, anhand derer die Ausführungsformen der Erfindung näher beschrieben werden, in der nachfolgenden Reihenfolge Separator, Kathode, Separator, Anode (SASK) oder Abwandlungen davon produziert und zu Batteriezellen aufeinander gestapelt.

Um eine möglichst große Ausbringung zu erreichen, wird hierfür anstatt einem ebenfalls zur Batteriezellproduktion bekannten Z-Falten ein kontinuierlicher Laminationsprozess verwendet.

Hierbei werden bisher in einer geschlossenen Anlage lediglich SASK-Pakete oder deren Abwandlungen produziert. Ein Wechsel in der Reihenfolge oder das Weglassen der Kathode ist bisher nicht bekannt.

Um eine Abschlusszelle als SAS-Paket (Separator, Anode, Separator) bereitzustellen, müssten diese bisher in eigenständigen Anlagen produziert werden und durch aufwändiges Handling als Abschluss der Batteriezelle dem Monozellstapel (Übereinander gestapelte SASK-Pakete und deren Abwandlungen) zugeführt werden. Dies erhöht den Aufwand und die minimal mögliche Taktzeit.

Ausgestaltungen der Erfindung ermöglichen eine (bisher noch nicht bekannte) Inline SAS-Paket-Bereitstellung (oder gemäß den alternativen Ausgestaltungen auch Inline SKS-Paket-Bereitstellung), was die Taktzeiten erheblich verringert und einen zusätzlichen teilweise händischen logistischen Aufwand, diese Pakete bereitzustellen, eliminiert.

Bevorzugte Ausgestaltungen der Erfindung ermöglichen einen (kontinuierlichen) Prozess, der flexibel einen kompletten Batteriestapel herstellt, wobei insbesondere die Bereitstellung eines SAS-Pakets (oder SKS-Pakets) während des Produktionsprozesses bei gleichzeitig hoher Ausbringung enthalten ist.

Gemäß bevorzugten Ausgestaltungen der Erfindung wird ein zusätzlicher Handlingsschritt, bei dem das SAS-Paket (oder alternativ SKS-Paket) aufgegriffen und wieder abgelegt werden muss, vermieden. Die Taktzeiten betragen beispielsweise nur 0,1 sec. pro Monozelle (bspw. SASK), und ein zusätzlicher Handlingsschritt ist in dieser Geschwindigkeit schwer zu realisieren.

Bei bevorzugten Ausgestaltungen kann durch das Weglassen einer Kathode im Produktionsprozess wie im Nachfolgenden dargestellt ein SAS-Paket während des regulären Produktionsprozesses bei Ausnutzung der normal möglichen Anlagengeschwindigkeit erzeugt werden. Hierfür wird vorzugsweise ein flexibles Transportsystem mit einzeln angesteuert bewegbaren Transporteinheiten eingesetzt, in dem ein Zwischenbereich als Puffer für die benötigten Kathodenbahnstücke genutzt wird. Soll ein SAS-Paket erzeugt werden, so wird eine Transporteinheit des Transportsystems zurückgehalten und keine Kathode an den Separator laminiert, wodurch ein SAS-Paket durch die Lamination aus dem leeren Separator und dem Separator mit anhaftender Anode entsteht. Bei einigen Ausgestaltungen liegt hierfür die Bahngeschwindigkeit der noch ungetrennten Kathodenbahn dauerhaft niedriger als die Bahngeschwindigkeit der ungetrennten Anodenbahn, um den Puffer nicht zu überfüllen.

Bei bevorzugten Ausgestaltungen wird demnach ein Transportsystem mit unabhängig voneinander bewegbaren Transporteinheiten genutzt (wie z.B. ein Moversystem mit frei verfahrbaren Movern, wie es durch Beckhoff XTS, auf dem Markt erhältlich ist, oder ein Transportsystem von B&R Supertrack).

Bei bevorzugten Ausgestaltungen der Erfindung wird zur Bereitstellung des ersten und zweiten Elektrodenstrangs jeweils ein Transportsystem mit unabhängig voneinander bewegbaren Transporteinheiten (wie z.B. ein Moversystem mit frei verfahrbaren Movern, wie es durch Beckhoff XTS, auf dem Markt erhältlich ist, oder ein Transportsystem von B&R Supertrack) genutzt, um eine Elektrodenbahn (nahezu endlos) per Vakuum aufzunehmen und zu einer Vereinzelungsstelle zu transportieren. Nach der Vereinzelung der Elektrodenbahn in Teilstücke, wird durch die flexiblen Transporteinheiten ein frei einstellbarer Spalt (Gap) zwischen den einzelnen Elektrodenstücken erstellt.

Nach einer Lamination des ersten und zweiten Elektrodenstrangs (auch Halbzellenstränge genannt) zu einem Verbundstrang werden davon die einzelnen Monozellen vereinzelt.

Der anschließende Stapelprozess sieht je nach vom Kunden gewünschter Stapelhöhe der Monozellen eine größere Anzahl an "Abwurfstellen" vor, um die produzierten SAS-Pakete als erstes Bauteil der Batteriezelle in das Monozellmagazin einzulegen. Die Anzahl an Abwurfstellen wird gemäß vorteilhaften Ausgestaltungen der Erfindung so groß gewählt, dass auch Lücken, die durch defekte Monozellen entstehen, ausgeglichen werden können.

Es sind keine zusätzlichen Anlagen zur Herstellung von SAS-Paketen nötig. Eine aufwändige Logistik zur Verteilung von SAS-Magazinen entfällt ebenfalls. Die Einschleusung von SAS-Paketen über beispielsweise Greifer in einen laufenden Prozess entfällt.

Ein Ausführungsbeispiel wird im Folgenden anhand der beigefügten Zeichnungen näher erläutert. Darin zeigt:
- Fig. 1: eine schematische Übersichtsdarstellung einer Ausführungsform einer Batteriezellstapelherstellvorrichtung zum Herstellen eines Batteriezellstapels aus einem ersten Elektrodenstrang und einem zweiten Elektrodenstrang; und
- Fig. 2: eine schematische Übersichtsdarstellung einer Ausführungsform einer Stapeleinrichtung der Batteriezellstapelherstellvorrichtung.

Im Folgenden werden unter Bezug auf die beigefügten Zeichnungen Verfahren und Vorrichtungen zum Herstellen eines Batteriezellstapels 22 aus Monozellen 86 beschrieben. Die Monozellen 86 werden dabei von einem Zellverbundstrang - im Folgenden auch einfach Verbundstrang 88 genannt - vereinzelt, der durch Verbund eines ersten und zweiten Elektrodenstrangs 32.1, 32.2 gebildet wird.

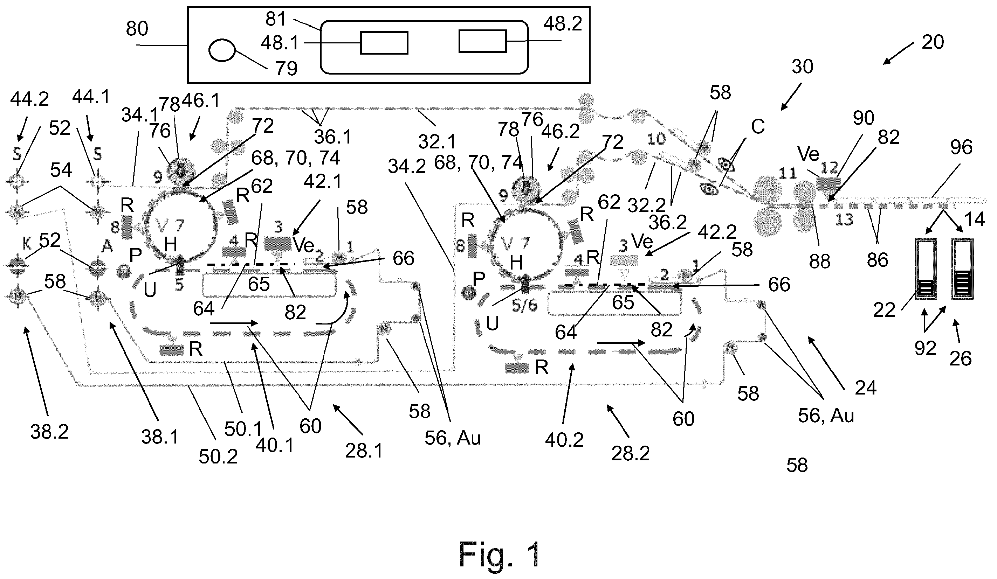

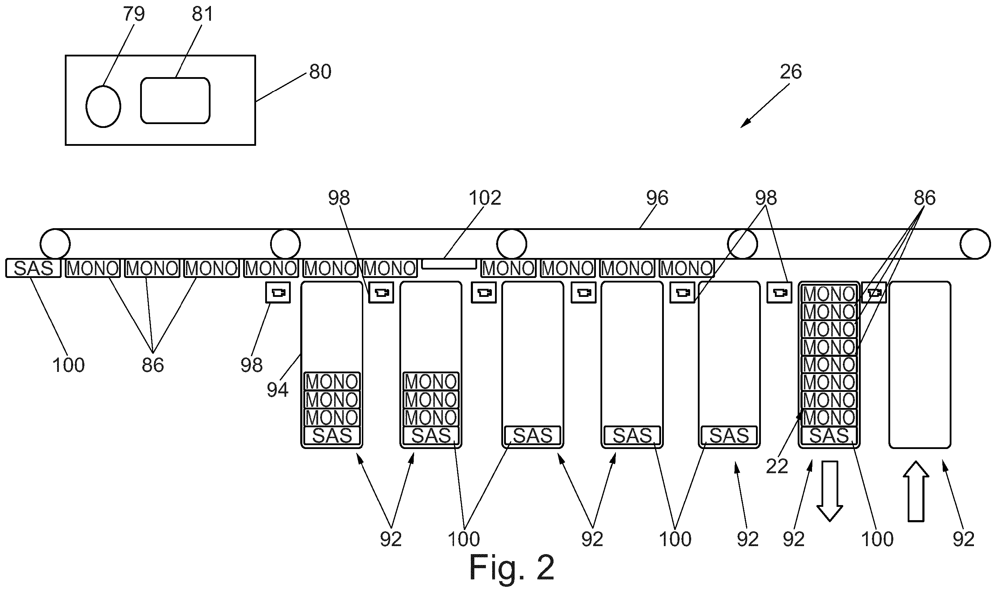

In den Fig. 1 ist ein Ausführungsbeispiel für eine Batteriezellstapelherstellvorrichtung 20 zum Herstellen eines Batteriezellstapels 22 dargestellt. Die Zellstapelherstellvorrichtung 20 weist eine Monozell-Herstellvorrichtung 24, eine Stapeleinrichtung 26 und eine Steuerung 80 auf. Fig. 2 zeigt ein Ausführungsbeispiel der Stapeleinrichtung 26.

Die Monozell-Herstellvorrichtung 24 weist eine erste Elektrodenstrangherstelleinrichtung 28.1, eine zweite Elektrodenstrangherstelleinrichtung 28.2, eine Strangverbindungseinrichtung 30 und eine Zellverbund-Vereinzelungseinrichtung 90 auf.

Die jeweilige Elektrodenstrangherstellvorrichtung 28.1, 28.1 dient jeweils zum Herstellen eines Elektrodenstrangs 32.1, 32.2, der eine Separatorbahn 34.1, 34.2 und daran mit Abstand zueinander angebrachte Elektrodensegmente 36.1, 36.2 aufweist. Die computergesteuerte erste Elektrodenstrangherstelleinrichtung 28.1 ist dazu ausgebildet, an einer ersten Separatorbahn 34.1 erste Elektroden 36.1, wie zum Beispiel Anoden A, in einem vorbestimmten Abstand zueinander zu befestigen, um eine Reihe aufeinanderfolgender erster Elektrodenhalbzellabschnitte mit einer vorbestimmten Länge zu bilden, so dass jeder erste Elektrodenhalbzellabschnitt aus einem Längenabschnitt der ersten Separatorbahn 34.1 und einer ersten Elektrode 36.1 gebildet ist. Die computergesteuerte zweite Elektrodenstrangherstelleinrichtung 28.2 ist dazu ausgebildet, an einer zweiten Separatorbahn 34.2 zweite Elektroden 36.2, die Gegenelektroden zu den ersten Elektroden 36.1 sind, wie zum Beispiel Kathoden K, in einem vorbestimmten Abstand zueinander zu befestigten, um eine Reihe von zweiten Elektrodenhalbzellabschnitten mit der gleichen vorbestimmten Länge wie die ersten Elektrodenhalbzellabschnitte zu bilden, so dass jeder zweite Elektrodenhalbzellabschnitt aus einem Längenabschnitt der zweiten Separatorbahn 34.2 und einer zweiten Elektrode 36.2 gebildet ist.

Der Aufbau der ersten und zweiten Elektrodenstrangherstellvorrichtung 28.1, 28.2 ist im Wesentlichen gleich und wird im Folgenden nur einmal am Beispiel einer der ersten und zweiten Elektrodenstrangherstellvorrichtung 28.1, 28.2 beschrieben.

Die Elektrodenstrangherstellvorrichtung 28.1, 28.2 weist eine Elektrodensubstratbereitstelleinrichtung 38.1, 38.2, ein Transportsystem 40.1, 40.2, eine Schneideinrichtung 42.1, 42.2, eine Separatorbahnbereitstelleinrichtung 44.1, 44.2, eine Aufbring- und Fixiereinrichtung 46.1, 46.2 und eine Steuereinheit 48.1, 48.2 auf.

Die Elektrodensubstratbereitstelleinrichtung 38.1, 38.2 ist zum Bereitstellen eines bahnförmigen Elektrodensubstrats 50.1, 50.2 ausgebildet. Beispielsweise weist die Elektrodensubstratbereitstelleinrichtung 38.1, 38.2 einen Rollenhalter für eine Vorratsrolle 52 mit dem jeweiligen bahnförmigen Elektrodensubstrat 50.1, 50.2, einen Antrieb 58 oder Motor zum Beschleunigen der Vorratsrolle 52 sowie wenigstens eine Messwalze (nicht dargestellt) auf, über die das bahnförmige Elektrodensubstrat 50.1, 50.2 geleitet wird und die die Abrolllänge und/oder die Abrollgeschwindigkeit, mit der das bahnförmige Elektrodensubstrat 50.1, 50.2 abgerollt und bereitgestellt wird, erfasst und eine entsprechende Information der Steuereinheit 48.1, 48.2 zuleitet.

Außerdem weist die Elektrodensubstratbereitstelleinrichtung 38.1, 38.2 bei den dargestellten Ausführungsformen eine Elektrodensubstratliefereinrichtung auf, die Ausrichtelemente 56, wie z.B. Rollen, und einen Antrieb 58 zum Antreiben der Bewegung des bahnförmigen Elektrodensubstrats 50.1, 50.2 umfasst.

Das Transportsystem 40.1, 40.2 weist entlang einer umlaufenden Führungsbahn 60 einzeln bewegbare Transporteinheiten 62 auf. Die Bewegung der einzelnen Transporteinheiten 62 lässt sich einzeln durch die Steuereinheit 48.1, 48.2 steuern. Das Transportsystem 40.1, 40.2 ist dazu eingerichtet, das von der Elektrodensubstratbereitstelleinrichtung 38.1, 38.2 bereitgestellte bahnförmige Elektrodensubstrat 50.1, 50.2 aufzunehmen und eben entlang einer Schneidebene 64 zu bewegen.

Beispielsweise weist die Führungsbahn 60 anschließend an eine Aufnahmestelle 66 einen geradlinigen Bereich auf, so dass sich die Oberflächen von Werkstückträgern der Transporteinheiten 62, auf denen das Elektrodensubstrat 50.1, 50.2 aufliegt und beispielsweise mittels Vakuums oder Greifern (nicht dargestellt) daran fixiert wird, entlang der Schneidebene 64 bewegen. Mit 65 ist hierbei der Bereich der Elektrodenfixierung bezeichnet, wo das Elektrodensubstrat 50.1, 50.2 und die daraus vereinzelten Elektrodensegmente an den Transporteinheiten 62 fixiert sind.

Bei einigen Ausführungsformen laufen die auf den Transporteinheiten 62 angebrachten Werkstückträger in dem Bereich der Elektrodenfixierung 65 an einem Luftkanal vorbei, der an eine Vakuumquelle (nicht dargestellt) angeschlossen ist. Bei anderen Ausführungsformen ist an den Transporteinheiten 62 jeweils eine Vakuumpumpe, z.B. ausgebildet als Membranpumpe, angeordnet, die mittels durch die Steuereinheit 48.1, 48.2 ansteuerbaren Ventilen an Luftanschlüsse des Werkstückträgers angeschlossen sind. Luftkreise der Werkstückträger werden so mit Vakuum versorgt, um die Elektrodensegmente 36.1, 36.2 in diesem Bereich der Elektrodenfixierung 65 an den Transporteinheiten 62 zu fixieren.

Demnach ist das Transportsystem 40.1, 40.2 bei den gezeigten Ausführungsformen dazu eingerichtet, das Elektrodensubstrat 50.1, 50.2 in der bahnförmigen und/oder der vereinzelten Form gezielt mittels Vakuums (oder auch alternativ mit anderen Mitteln, wie z.B. Greifern) an den einzelnen Transporteinheiten 62 zum Transportieren und Schneiden festzuhalten.

Wie oben erwähnt, ist die Bewegung der Transporteinheiten 62 einzeln steuerbar. Bei einigen Ausführungsformen weist das Transportsystem 40.1, 40.2 hierzu insbesondere in der Steuereinheit 48.1, 48.2 als Software implementierte Mittel zum Einstellen eines Abstands zwischen abgeschnittenen Elektrodensegmenten 36.1, 36.2 durch Relativbewegung der Transporteinheiten 62 auf, um die Elektrodensegmente 36.1, 36.2 relativ zueinander zu positionieren.

Die Schneideinrichtung 42.1, 42.2 ist zum Schneiden des Elektrodensubstrats 50.1, 50.2 entlang einer ein- oder zweidimensional in der Schneidebene 64 verlaufenden Schneidkontur ausgebildet, um die Elektroden 36.1, 36.2 von dem Elektrodensubstrat 50.1, 50.2 abzuschneiden. Beispielsweise weist die Schneideinrichtung 42.1, 42.2, wie dies grundsätzlich aus [1] bekannt ist, einen Schneidlaser mit entsprechenden Ablenkeinheiten auf, die durch die Steuereinheit 48.1, 48.2 angesteuert werden, um den Laserstrahl entlang der Schneidkontur zu lenken.

Die Schneideinrichtung 42.1, 42.2 ist zum Schneiden auf der ebenen Oberfläche eingerichtet. Die Schneidkontur der Schneideinrichtung 42.1, 42.2 ist zum Formen der Seitenränder der jeweiligen Elektrode 36.1, 36.2 ausgebildet. Insbesondere können dabei auch Ableiterfahnen an wenigstens einem Seitenrand der Elektrode 36.1, 36.2 beim Schneiden ausgebildet werden. Dies kann mittels Durchführens eines zweidimensionalen Laserschnitts innerhalb der Schneidebene 64 erfolgen.

Die Separatorbahnbereitstelleinrichtung 44.1, 44.2 ist zum Bereitstellen der Separatorbahn 34.1, 34.2 eingerichtet. Analog zu der Elektrodensubstratbereitstelleinrichtung 38.1, 38.2 kann sie beispielsweise eine Vorratsrolle 52 mit der Separatorbahn 34.1, 34.2, einen Antrieb 58 und eine Messwalze (nicht dargestellt) aufweisen, deren Signale ebenfalls an die Steuereinheit 48.1, 48.2 geleitet werden.

Die Aufbring- und Fixiereinrichtung 46.1, 46.2 ist zum Aufbringen und Fixieren von mittels des Transportsystems 40.1, 40.2 relativ zueinander positioniert angelieferten Elektroden 36.1, 36.2 auf der Separatorbahn 34.1, 34.2 ausgebildet.

Bei einigen Ausführungsformen weist die Aufbring- und Fixiereinrichtung 46.1, 46.2 eine Heizeinrichtung 68 zum gezielten Erwärmen der Elektroden 36.1, 36.2 auf. Bei einigen Ausführungsformen weist die Aufbring- und Fixiereinrichtung 46.1, 46.2 eine Transporteinrichtung 70 zum Transportieren und Abheben der relativ zueinander positionierten Elektroden 36.1, 36.2 von den Transporteinheiten 62 zu einer Laminierstelle 72 auf.

Bei den dargestellten Ausführungsformen ist als Transporteinrichtung 70 mit Heizeinrichtung 68 eine Vakuum-Heizwalze 74 vorgesehen, deren Oberfläche durch eine integrierte Heizung gezielt beheizbar ist und mit Ansaugöffnungen versehen ist, um die Elektroden 36.1, 36.2 anzusaugen. Alternativ kann auch eine temperierte Walze oder eine extern temperierte Vakuum-Walze vorgesehen sein.

Bei einigen Ausführungsformen weist die Aufbring- und Fixiereinrichtung 46.1, 46.2 weiter eine vorzugsweise unbeschichtete Laminierwalze 76 auf, die mit der Presskraft einer Presseinrichtung 78 auf die Transporteinrichtung 70, insbesondere die Vakuum-Heizwalze 74, gepresst wird, um die Elektrodensegmente 36.1, 36.2 auf die durch die Separatorbahnbereitstelleinrichtung 44.1, 44.2 bereitgestellte Separatorbahn 34.1, 34.2 zu laminieren.

Bei den dargestellten Ausführungsbeispiel ist die Laminierwalze 76 durch die Steuereinheit 48.1, 48.2 gesteuert angetrieben. Bei einigen Ausführungsformen werden dadurch auch die Bewegungen der Vakuum-Heizwalze 74 und der Separatorbahn 34.1, 34.2 angetrieben. Bei anderen Ausführungsformen ist die Vakuum-Heizwalze 74 durch die Steuereinheit gesteuert drehend angetrieben. Auch können weitere Antriebe zum Antreiben der Bewegung der Separatorbahn 34.1, 34.2 vorgesehen sein. Bei einigen Ausführungen kann die Laminierwalze 76 ohne Antrieb ausgebildet sein.

Bei den dargestellten Ausgestaltungen der Monozellen-Herstellvorrichtung 24 dient die erste Elektrodenstrangherstellvorrichtung 28.1 demnach zum Herstellen eines mit Anoden A als erste Elektroden 36.1 versehenen Anodenstrangs, und die zweite Elektrodenstrangherstelleinrichtung 28.2 dient zum Herstellen eines mit Kathoden K als zweite Elektroden 36.2 versehenen Anodenstrangs.

Die computergesteuerte Strangverbindungseinrichtung 30 ist dazu ausgebildet, den Zellverbundstrang 88 durch Ausrichten und aneinander Befestigen des ersten Elektrodenstrangs 32.1 und des zweiten Elektrodenstrangs 32.2 derart zu bilden, dass in aufeinanderfolgenden Längenabschnitten in dem Zellverbundstrang 88 jeweils ein erster Elektrodenhalbzellabschnitt und ein zweiter Elektrodenhalbzellabschnitt aufeinanderliegen, um eine Reihe von Monozellenbereiche zu bilden, die jeweils einen Schichtaufbau aus einem Längenabschnitt der einen der ersten und zweiten Separatorbahn 34.1, 34.2, der einen der ersten und zweiten Elektrode 36.1, 36.2, einem Längenabschnitt der anderen der ersten und zweiten Separatorbahn 34.2, 34.1 und der anderen der ersten und zweiten Elektrode 36.1, 36.2 aufweisen. Bei der dargestellten Ausführungsform werden Monozellenbereiche mit dem Schichtaufbau SASK gebildet, bei anderen Ausführungen (nicht dargestellt) können auch Monozellenbereiche mit dem Schichtaufbau SKSA gebildet werden.

Konkret ist die Strangverbindungseinrichtung 30 dazu eingerichtet, den Anodenstrang und den Kathodenstrang zu dem Verbundstrang 88 mit zueinander ausgerichtet übereinander liegenden Anoden und Kathoden zu verbinden.

Die Vereinzelungseinrichtung 90 ist zum Vereinzeln von Zellen 86, 100 durch Abschneiden von dem Verbundstrang 88 vorgesehen.

Die Stapeleinrichtung 26 ist zum Stapeln mehrerer durch die Monozell-Herstellvorrichtung 24 hergestellter Zellen 86, 100 zu einem Batteriezellstapel 22 ausgebildet.

Wie man insbesondere Fig. 2 entnehmen kann, weist die computergesteuerte Stapeleinrichtung 26 mehrere Stapelplätze 92 auf, die in einer Transportrichtung der Zellen 86, 100 hintereinander angeordnet sind. An den Stapelplätzen 92 können austauschbare Warenträger 94 angebracht werden, die die Batteriezellstapel 22 aufnehmen und die nach Befüllung ausgetauscht werden können. Bei der dargestellten Ausführungsform ist weiter ein Förderband 96, hier in Form eines Vakuumbandes vorgesehen, welches die Zellen 86, 100 zu den Stapelplätzen 92 liefert und von dem die Zellen 86, 100 zum Stapeln abgeworfen werden.

Weiter weist die Stapeleinrichtung 26 eine Zellenerfassungs- und -zähleinrichtung 98 zum Erfassen der Anzahl von Zellen an einem oder mehreren Stapelplätzen auf. Diese ist in Fig. 2 nur schematisch dargestellt und weist beispielsweise eine Bilderfassung mit Auswerteeinheit auf, die vorzugsweise an jedem Stapelplatz 92 die Anzahl der abgeworfenen Zellen 86, 100 erfasst.

Die Steuerung 80 ist dazu eingerichtet, die Batteriezellstapelherstellvorrichtung 20 zum Durchführen des im Folgenden erläuterten Batteriezellstapelherstellverfahren anzusteuern.

Die Steuerung 80 weist einen Prozessor 79 und einen Speicher 81 mit einem darin gespeicherten Computerprogramm auf, das die entsprechenden Anweisungen enthält, welche die Einheiten der Batteriezellstapelherstellvorrichtung 20 veranlassen, dieses Batteriezellstapelherstellverfahren durchzuführen.

Das Batteriezellstapelherstellverfahren zum Herstellen von Batteriezellstapeln weist die Folgenden Schritte a) bis e) auf:
a) Herstellen des ersten Elektrodenstrangs 32.1, wobei an der ersten Separatorbahn 34.1 erste Elektroden 36.1 im vorbestimmten Abstand zueinander befestigt werden, um eine Reihe aufeinanderfolgender erster Elektrodenhalbzellabschnitte mit einer vorbestimmten Länge zu bilden, so dass jeder erste Elektrodenhalbzellabschnitt aus einem Längenabschnitt der ersten Separatorbahn 34.1 und einer ersten Elektrode 36.1 gebildet ist,
b) Herstellen des zweiten Elektrodenstrangs 32.2, wobei an der zweiten Separatorbahn 34.2 zweite Elektroden 36.2, die Gegenelektroden zu den ersten Elektroden 36.1 sind, in einem vorbestimmten Abstand zueinander befestigt werden, um eine Reihe von zweiten Elektrodenhalbzellabschnitten mit der gleichen vorbestimmten Länge wie die ersten Elektrodenhalbzellabschnitte zu bilden, so dass jeder zweite Elektrodenhalbzellabschnitt aus einem Längenabschnitt der zweiten Separatorbahn 34.2 und einer zweiten Elektrode 36.2 gebildet ist,
c) Bilden des Zellverbundstrangs 88 durch Ausrichten und aneinander Befestigen des ersten Elektrodenstrangs 32.1 und des zweiten Elektrodenstrangs 32.2 derart, dass in aufeinanderfolgenden Längenabschnitten in dem Zellverbundstrang 88 jeweils ein erster Elektrodenhalbzellabschnitt und ein zweiter Elektrodenhalbzellabschnitt aufeinanderliegen, um eine Reihe von Monozellenbereichen zu bilden, die jeweils einen Schichtaufbau aus einem Längenabschnitt der einen der ersten und zweiten Separatorbahn 34.1, 34.2, der einen der ersten und zweiten Elektrode 36.1, 36.2, einem Längenabschnitt der anderen der ersten und zweiten Separatorbahn 34.1, 34.2 und der anderen der ersten und zweiten Elektrode 36.1, 36.2 aufweisen,
d) Vereinzeln der Längenabschnitte des Zellverbundstrangs 88, um die Monozellenbereiche zu Monozellen 86 zu vereinzeln, die einen Schichtaufbau aus Separator S, der einen der ersten und zweiten Elektrode 36.1, 36.2, Separator S und der anderen der ersten und zweiten Elektrode 36.1, 36.2 aufweisen, und
e) Stapeln mehrerer Monozellen 86 aufeinander, um einen Batteriezellstapel 22 mit sich wiederholendem Schichtaufbau Separator S - eine der ersten und zweiten Elektrode 36.1, 36.2 - Separator S - andere der ersten und zweiten Elektrode 36.1, 36.2 zu bilden.

Zum Inline-Einschleusen von Abschlusszellen 100 - zum Beispiel jeweils eines SAS-Pakets als Abschlusszelle eines aus SASK-Monozellen gebildeten Batteriezellstapels 22 - wird beim Durchführen von Schritt b) - Herstellen des zweiten Elektrodenstrangs 32.2 - folgender Unterschritt durchgeführt: b1) Weglassen einer zweiten Elektrode 36.2 an mehreren Stellen, so dass jeweils ein Leerabschnitt mit der gleichen vorbestimmten Länge wie der erste Elektrodenhalbzellabschnitt entsteht, wobei der Leerabschnitt aus einem Längenabschnitt der zweiten Separatorbahn 34.1 ohne zweite Elektrode gebildet ist.

Beim Durchführen von Schritt c) - Bilden des Zellverbundstrangs - wird dann folgender Unterschritt durchgeführt:
c1) Ausrichten jedes Leerabschnitts mit einem ersten Elektrodenhalbzellabschnitt, so dass in dem Zellverbundstrang an den mehreren Stellen jeweils ein Abschlusszellenbereich entsteht, der einen Schichtaufbau aus dem Längenabschnitt der ersten Separatorbahn 34.1, der ersten Elektrode 36.2 und dem Längenabschnitt der zweiten Separatorbahn 34.2, jedoch keine zweite Elektrode aufweist.

Beim Durchführen von Schritt d) wird dann folgender Unterschritt durchgeführt:
d1) Vereinzeln der Abschlusszellenbereiche von dem Zellverbundstrang 88, um Abschlusszellen 100 zu erhalten, die einen Schichtaufbau aus Separator S, erster Elektrode 36.1 und Separator S aufweist.

Und beim Durchführen von Schritt e) wird folgender Unterschritt durchgeführt:
Beginnen oder Enden des Stapelns mit einer in Schritt d1) erhaltenen Abschlusszelle 100, so dass jeder Batteriezellstapel 22 an jedem Ende mit einer ersten Elektrode 36.1 und einem Separator S abschließt.

Bei den in den Figuren dargestellten Ausführungsformen sind die ersten Elektroden 36.1 Anoden und die zweiten Elektroden 36.2 Kathoden, und es werden Monozellen 86 mit einem SASK-Schichtaufbau und Abschlusszellen 100 mit einem Schichtaufbau SAS hergestellt. Jedes Stapeln eines neuen Batteriezellstapels 22 an einem der Stapelplätze 92 beginnt dann mit einer Abschlusszelle 100, so dass die unteren Bereiche der Stapel von unten nach oben gesehen einen Aufbau SAS-KSAS-KSAS-... aufweisen und die oberen Bereiche der fertigen Stapel von unten nach oben gesehen einen Aufbau ... KSAS-KSAS aufweisen. Bei anderen nicht dargestellten Ausführungsformen sind die ersten Elektroden 36.1 Kathoden und die zweiten Elektroden 36.2 Anoden, das Stapeln beginnt wiederrum mit einer Abschlusszelle 100 und es ergibt sich von unten nach oben gesehen ein Schichtaufbau SKS-ASKS-ASKS...-ASKS-ASKS. Bei anderen Ausführungsformen kann auch mit einer mit dem Separator nach unten gerichteten Monozelle 86 begonnen werden und mit einer Abschlusszelle 100 abgeschlossen werden, es ergibt sich dann von unten nach oben gesehen ein Schichtaufbau SASK-SASK-...SASK-SAS oder alternativ SKSA-SKSA-...SKSA-SKS.

Konkrete bevorzugte Ausgestaltungen des Batteriezellstapelherstellverfahrens ergeben sich aus den Fig. 1 und 2. Folgende Prozessschritte sind gezeigt:
- 1: Zuführung von Elektroden und Separatoren als Bahnmaterial in den Schneide- und Laminierungsprozess
- 2: Aufziehen der Bahn auf ein Transportsystem mit flexibel beweglichen Trägern für die vereinzelten Elektroden
- 3: Vereinzeln der Elektrodenbahnen sowohl für die Anode als auch für die Kathode
- 4: Optionale Reinigung der Elektroden
- 5: Übergabe der Elektroden auf die Vakuumwalze
- 6: Optional kann bei Bedarf eine Elektrode ausgelassen werden für die Bereitstellung einer Abschlusszelle beispielsweise eines SAS-Paketes
- 7: Erwärmen der Elektroden
- 8: Optionale Reinigung der Elektroden
- 9: Laminierung der Halbzellen zu zwei Halbzellensträngen
- 10: Zusammenführung der Halbzellenstränge
- 11: Laminierung der beiden Halbzellenstränge zu einem Monozellenstrang
- 12: Vereinzeln der Monozellen bzw. Abschlusszellen
- 13: Übergabe der Monozellen bzw. Abschlusszellen an ein Transportband zur weiteren Verarbeitung
- 14: Stapeln der Monozellen zu einem Batteriezellstapel

Die in den Fig. 1 verwendeten Symbole bedeuten:
- U: Übergabe Lamination
- R: Reinigung
- Ve: Vereinzelung
- C: Kontrolle
- M: Antrieb
- Au: Ausrichten
- P: (Papierwickler/Mülleimer Autosplice)
- H: Heizung
- V: Vakuum
- S: Separator
- K: Kathode(nsubstrat)
- A: Anode(nsubstrat)

Bei 6 wird für die Bereitstellung eines SAS-Paketes (Beispiel für eine Abschlusszelle 100) eine Lücke im Kathodenstrang generiert, in dem eine Kathode bei der Übergabe auf die Vakuum-Heizwalze 74 ausgelassen wird. Die dabei entstehende Lücke im Kathodenstrang kann für die Bereitstellung einer Halbzelle im SAS-Format (Anode eingeschlossen in 2 Separatoren) genutzt werden. Die Ausnutzung der normal möglichen Anlagengeschwindigkeit bleibt möglich, indem hierfür das flexible Transportsystem 40.2 eingesetzt wird, in dem der Platz unter der optionalen Elektrodenreinigung 4 als Puffer für Transporteinheiten 62 mit sich darauf befindenden Kathodenbahnstücken genutzt wird. Soll ein SAS-Paket erzeugt werden, so wird die Transporteinheit 62 zurückgehalten und keine Kathode an den Separator laminiert, wodurch ein SAS-Paket durch die Lamination aus dem leeren Separator und dem Separator mit anhaftender Anode entsteht. Hierfür liegt die Bahngeschwindigkeit der noch ungetrennten Kathodenbahn dauerhaft niedriger als die Bahngeschwindigkeit der ungetrennten Anodenbahn um den Puffer nicht zu überfüllen.

Im Folgenden wird ein konkretes Beispiel für den Stapelprozess 14 anhand der Darstellung in Fig. 2 beschrieben.

Aus dem vorgelagerten Prozess (siehe Fig. 1) der Mono- bzw. Halbzellenherstellung werden die Monozellen/ SAS-Pakete an das Förderband (Vakuumband) 96 übergeben. Die Stapelplätze 92 werden immer zuerst mit einem SAS-Paket - Abschlusszelle 100 - bestückt und dann mit Monozellen 86 aufgefüllt. Eventuell entstehende Lücken aufgrund von defekten Zellen 102, die im Anlagenverlauf - siehe Symbol C Kontrolle - festgestellt werden, werden berücksichtigt, um keinen zusätzlichen händischen Aufwand zu erzeugen. Hierfür sind die folgenden Parameter aufeinander abgestimmt:
- Produktion der Abschlusszellen 100 - abhängig vom Füllgrad der Stapelplätze 92;
- Ausschleusung defekter Zellen 102, wie z.B. defekter Monozellen 86;
- Abstand zwischen Laminationsprozess und Abwurfstellen (Beeinträchtigt die Regelbarkeit sowie die Anzahl an nötigen Abwurfstellen)
- Stapelprozess (Anzahl der Zellen in jedem Stapel wird getrackt)
- Anzahl Abwurfstellen (Ausreichend für hohe Taktzeit, da Wechselzeiten der Warenträger 94 berücksichtigt werden muss sowie die Pufferung für den Fall von Lücken aufgrund defekter Zellen 102).

Um Batteriezellstapel (22) in industrieller Großserienfertigung mit sehr schnellen Taktzeiten und geringem Aufwand derart herzustellen, dass die beiden Enden des Batteriezellstapels (22) mit der gleichen Art Elektrode (A oder K) und einem Separator (S) abschließen, sind Verfahren und Vorrichtungen (20) zum Herstellen von Batteriezellstapeln (22) vorgeschlagen worden, bei denen ein erster und zweiter Elektrodenstrang (32.1, 32.2) mit Separatorbahn (34.1, 34.2) und daran mit Abstand angeordneten ersten bzw. zweiten Elektroden (36.1, 36.2) zu einem Verbundstrang (88) zusammengefügt werden und davon Monozellen (86) vereinzelt werden. Zum Bilden von Abschlusszellen (100) wird bei der Herstellung des zweiten Elektrodenstrangs (32.2) an einigen Stellen jeweils eine zweite Elektrode (36.2) ausgelassen, so dass ein Längenabschnitt der jeweiligen Separatorbahn (34.2) ohne die entsprechende zweite Elektrode entsteht. Im Verbundstrang (88) bildet sich dann ein Abschlusszellenbereich aus, in dem eine erste Elektrode (36.1) zwischen Separatorbahn-Längenabschnitten eingefügt wird. Dieser wird beim Vereinzeln der Zellen (86, 100) vom Verbundstrang (88) zu einer Abschlusszelle (100) vereinzelt. Ein anschließendes Stapeln kann dann mit einer Abschlusszelle (100) beginnen oder enden.

### Bezugszeichenliste:

- 1: Zuführung von Elektroden und Separatoren als Bahnmaterial in den Schneide- und Laminierungsprozess
- 2: Aufziehen der Bahn auf ein Transportsystem mit flexibel beweglichen Trägern für die vereinzelten Elektroden
- 3: Vereinzeln der Elektrodenbahnen sowohl für die Anode als auch für die Kathode
- 4: Optionale Reinigung der Elektroden
- 5: Übergabe der Elektroden auf die Vakuumwalze
- 6: Bei Bedarf wird eine Elektrode ausgelassen für die Bereitstellung einer Abschlusszelle, beispielsweise eines SAS-Paketes
- 7: Erwärmen der Elektroden
- 8: Optionale Reinigung der Elektroden
- 9: Laminierung der Halbzellen zu zwei Halbzellensträngen
- 10: Zusammenführung der Halbzellenstränge
- 11: Laminierung der beiden Halbzellenstränge zu einem Monozellenstrang
- 12: Vereinzeln der Monozellen
- 13: Übergabe der Monozellen an ein Transportband zur weiteren Verarbeitung
- 14: Stapeln der Monozellen zu einem Batteriezellstapel
- 20: Batteriezellstapelherstellvorrichtung
- 22: Batteriezellstapel
- 24: Monozell-Herstellvorrichtung
- 26: Stapeleinrichtung
- 28.1: erste Elektrodenstrangherstellvorrichtung
- 28.2: zweite Elektrodenstrangherstellvorrichtung
- 30: Strangverbindungseinrichtung
- 32.1: erster Elektrodenstrang
- 32.2: zweiter Elektrodenstrang
- 34.1: erste Separatorbahn
- 34.2: zweite Separatorbahn
- 36.1: erste Elektrode
- 36.2: zweite Elektrode
- 38.1: Erste-Elektrodensubstratbereitstelleinrichtung
- 38.2: Zweite-Elektrodensubstratbereitstelleinrichtung
- 40.1: Erste-Elektroden-Transportsystem
- 40.2: Zweite-Elektroden-Transportsystem
- 42.1: Erste-Elektroden-Schneideinrichtung
- 42.2: Zweite-Elektroden-Schneideinrichtung
- 44.1: Erste-Separatorbahnbereitstelleinrichtung
- 44.2: Zweite-Separatorbahnbereitstelleinrichtung
- 46.1: Erste-Elektroden-Aufbring- und Fixiereinrichtung
- 46.2: Zweite-Elektroden-Aufbring- und Fixiereinrichtung
- 48.1: erste Steuereinheit
- 48.2: zweite Steuereinheit
- 50.1: bahnförmiges Erste-Elektrodensubstrat
- 50.2: bahnförmiges Zweite-Elektrodensubstrat
- 52: Vorratsrolle
- 54: Messwalze
- 56: Ausrichtelement
- 58: Antrieb
- 60: Führungsbahn
- 62: Transporteinheit
- 64: Schneidebene
- 65: Elektrodenfixierung
- 66: Aufnahmestelle
- 68: Heizeinrichtung
- 70: Transporteinrichtung
- 72: Laminierstelle
- 74: Vakuum-Heizwalze
- 76: Laminierwalze
- 78: Presseinrichtung
- 79: Prozessor
- 80: Steuerung
- 81: Speicher
- 82: Vereinzelungsstelle
- 86: Monozelle
- 88: Verbundstrang
- 90: Vereinzelungseinrichtung
- 92: Stapelplatz
- 94: Warenträger
- 96: Förderband
- 98: Zellerfassungs- und Zähleinrichtung
- 100: Abschlusszelle
- 102: defekte Zelle
- U: Übergabe Lamination
- R: Reinigung
- Ve: Vereinzelung
- C: Kontrolle
- M: Antrieb
- Au: Ausrichten
- P: (Papierwickler/Mülleimer Autosplice)
- H: Heizung
- V: Vakuum
- S: Separator
- K: Kathode(nsubstrat)
- A: Anode(nsubstrat)

## Patentansprüche

1. Batteriezellstapelherstellverfahren zum Herstellen von Batteriezellstapeln (22), umfassend:
a) Herstellen eines ersten Elektrodenstrangs (32.1), wobei an einer ersten Separatorbahn (34.1) erste Elektroden (36.1) in einem vorbestimmten Abstand zueinander befestigt werden, um eine Reihe aufeinanderfolgender erster Elektrodenhalbzellabschnitte mit einer vorbestimmten Länge zu bilden, so dass jeder erste Elektrodenhalbzellabschnitt aus einem Längenabschnitt der ersten Separatorbahn (34.1) und einer ersten Elektrode (36.1) gebildet ist,
b) Herstellen eines zweiten Elektrodenstrangs (32.2), wobei an einer zweiten Separatorbahn (34.2) zweite Elektroden (36.2), die Gegenelektroden zu den ersten Elektroden (36.1) sind, in einem vorbestimmten Abstand zueinander befestigt werden, um eine Reihe von zweiten Elektrodenhalbzellabschnitten mit der gleichen vorbestimmten Länge wie die ersten Elektrodenhalbzellabschnitte zu bilden, so dass jeder zweite Elektrodenhalbzellabschnitt aus einem Längenabschnitt der zweiten Separatorbahn (34.2) und einer zweiten Elektrode (36.2) gebildet ist,
c) Bilden eines Zellverbundstrangs (88) durch Ausrichten und aneinander Befestigen des ersten Elektrodenstrangs (32.1) und des zweiten Elektrodenstrangs (32.2) derart, dass in aufeinanderfolgenden Längenabschnitten in dem Zellverbundstrang (88) jeweils ein erster Elektrodenhalbzellabschnitt und ein zweiter Elektrodenhalbzellabschnitt aufeinanderliegen, um eine Reihe von Monozellenbereichen zu bilden, die jeweils einen Schichtaufbau aus einem Längenabschnitt der einen der ersten und zweiten Separatorbahn (34.1, 34.2), der einen der ersten und zweiten Elektrode (36.1, 36.2), einem Längenabschnitt der anderen der ersten und zweiten Separatorbahn (34.1, 34.2) und der anderen der ersten und zweiten Elektrode (36.1, 36.2) aufweisen,
d) Vereinzeln der Längenabschnitte des Zellverbundstrangs (88), um die Monozellenbereiche zu Monozellen (86) zu vereinzeln, die einen Schichtaufbau aus Separator (S), der einen der ersten und zweiten Elektrode (36.1, 36.2), Separator (S) und der anderen der ersten und zweiten Elektrode (36.1, 36.2) aufweisen, und
e) Stapeln mehrerer Monozellen (86) aufeinander, um einen Batteriezellstapel (22) mit sich wiederholendem Schichtaufbau Separator (S) - eine der ersten und zweiten Elektrode (36.1, 36.2) - Separator (S) - andere der ersten und zweiten Elektrode (36.1, 36.2) zu bilden,
**dadurch gekennzeichnet,**
**dass** Schritt b) umfasst:
b1) Weglassen einer zweiten Elektrode (36.2) an mehreren Stellen, so dass jeweils ein Leerabschnitt mit der gleichen vorbestimmten Länge wie der erste Elektrodenhalbzellabschnitt entsteht, der aus einem Längenabschnitt der zweiten Separatorbahn (34.2) ohne zweite Elektrode gebildet ist, dass Schritt c) umfasst:
c1) Ausrichten jedes Leerabschnitts mit einem ersten Elektrodenhalbzellabschnitt, so dass in dem Zellverbundstrang an den mehreren Stellen jeweils ein Abschlusszellenbereich entsteht, der einen Schichtaufbau aus dem Längenabschnitt der ersten Separatorbahn (34.1), der ersten Elektrode (36.1) und dem Längenabschnitt der zweiten Separatorbahn (34.2), jedoch keine zweite Elektrode (36.2) aufweist,
**dass** Schritt d) umfasst:
d1) Vereinzeln der Abschlusszellenbereiche von dem Zellverbundstrang (88), um Abschlusszellen (100) zu erhalten, die einen Schichtaufbau aus Separator (S), erster Elektrode (36.1) und Separator (S) aufweist,
und **dass** Schritt e) umfasst:
Beginnen oder Enden des Stapelns mit einer in Schritt d1) erhaltenen Abschlusszelle (100), so dass jeder Batteriezellstapel (22) an jedem Ende mit einer ersten Elektrode (36.1) und einem Separator (S) abschließt.

2. Batteriezellstapelherstellverfahren nach Anspruch 1, **dadurch gekennzeichnet,**
**dass** Schritt e) wenigstens einen oder mehrere der Schritte enthält:
e1) Bilden mehrerer Batteriezellstapel (22) an mehreren Stapelplätzen (92), die in einer Transportrichtung der Mono- und Abschlusszellen (86, 100) hintereinander angeordnet sind;
e2) Beginnen eines jeden Batteriezellstapels (22) mit einer Abschlusszelle (100);
e3) Erfassen der Anzahl von Zellen (86, 100) an jedem Stapelplatz (92).

3. Batteriezellstapelherstellverfahren nach einem der voranstehenden Ansprüche, **dadurch gekennzeichnet,**
**dass** Schritt b1) wenigstens einen oder mehrere der Schritte umfasst:
b1a) flexibles Erzeugen eines Leerabschnittes auf einen Steuerbefehl hin;
b1b) Erzeugen von Leerabschnitten abhängig von einer Anzahl von Zellen (86, 100) in einem oder mehreren der in Schritt e) entstehenden Batteriezellstapeln (22);
b1c) Erzeugen von Leerabschnitten abhängig von einem Füllgrad von Stapelplätzen (92).

4. Batteriezellstapelherstellverfahren nach einem der voranstehenden Ansprüche, **dadurch gekennzeichnet,**
**dass** Schritt b) Bereitstellen der zweiten Elektroden (36.2) durch Vereinzeln von einem bahnförmigen Zweite-Elektrodensubstrat (50.2) umfasst und dass Schritt a) Bereitstellen der ersten Elektroden (36.1) durch Vereinzeln von einem bahnförmigen Erste-Elektrodensubstrat (50.1) umfasst und dass eine Geschwindigkeit, mit der das bahnförmige Zweite-Elektrodensubstrat (50.2) zum Bereitstellen der zweiten Elektroden (36.2) angeliefert wird, geringer ist als eine Geschwindigkeit, mit der das bahnförmige Erste-Elektrodensubstrat (50.1) zum Bereitstellen der ersten Elektroden (36.1) angeliefert wird.

5. Batteriezellstapelherstellverfahren nach einem der voranstehenden Ansprüche, **dadurch gekennzeichnet,**
**dass** Schritt b) umfasst:
b2) Bereitstellen der zweiten Elektroden (36.2) mittels eines flexiblen Zweite-Elektroden-Transportsystems (40.2), das entlang einer Führungsbahn (60) einzeln bewegbare Transporteinheiten (62) aufweist, auf denen jeweils eine zweite Elektrode (36.2) transportiert wird,
und **dass** Schritt b1) umfasst:
b2.1) Zurückhalten einer Transporteinheit (62), um den Leerabschnitt zu bilden.

6. Batteriezellstapelherstellverfahren nach Anspruch 5, **dadurch gekennzeichnet,**
**dass** Schritt b) die folgende Reihenfolge von Schritten umfasst:
b-a) Bereitstellen eines bahnförmigen Zweite-Elektrodensubstrats (50.2);
b-b) Aufnehmen des bahnförmigen Zweite-Elektrodensubstrats (50.2) mittels des Zweite-Elektroden-Transportsystems (40.2) und Transportieren des Zweite-Elektrodensubstrats (50.2) zu einer Zweite-Elektroden-Schneideinrichtung (42.2);
b-c) Schneiden des bahnförmigen Zweite-Elektrodensubstrats (50.2) in der Zweite-Elektroden-Schneideinrichtung (42.2), um zweite Elektroden (36.2) abzuschneiden, die jeweils einzeln auf einer der Transporteinheiten (62) angeordnet sind;
b-d) Einstellen eines Abstands zwischen abgeschnittenen zweiten Elektroden (36.2) mittels Relativbewegung der Transporteinheiten (62), um die zweiten Elektroden (36.2) relativ zueinander zu positionieren;
b-e) Bereitstellen der zweiten Separatorbahn (34.2);
b-f) Aufbringen und Fixieren der relativ zueinander positionierten zweiten Elektroden (36.2) auf der zweiten Separatorbahn (34.2).

7. Batteriezellstapelherstellverfahren nach einem der voranstehenden Ansprüche, **dadurch gekennzeichnet,**
**dass** Schritt a) die folgende Reihenfolge von Schritten umfasst:
a-a) Bereitstellen eines bahnförmigen Erste-Elektrodensubstrats (50.1);
a-b) Aufnehmen des bahnförmigen Erste-Elektrodensubstrats (50.1) mittels eines flexiblen Erste-Elektroden-Transportsystems (40.1), das entlang einer Führungsbahn (60) einzeln bewegbare Transporteinheiten (62) aufweist, und Transportieren des Erste-Elektrodensubstrats (50.1) zu einer Erste-Elektroden-Schneideinrichtung (42.1);
a-c) Schneiden des bahnförmigen Erste-Elektrodensubstrats (50.1) in der Erste-Elektroden-Schneideinrichtung (42.1), um erste Elektroden 36.1) abzuschneiden, die jeweils einzeln auf einer der Transporteinheiten (62) des Erste-Elektroden-Transportsystems (40.1) angeordnet sind;
a-d) Einstellen eines Abstands zwischen abgeschnittenen ersten Elektroden (36.1) mittels Relativbewegung der Transporteinheiten (62), um die ersten Elektroden (36.1) relativ zueinander zu positionieren;
a-e) Bereitstellen der ersten Separatorbahn (34.1);
a-f) Aufbringen und Fixieren der relativ zueinander positionierten ersten Elektroden (36.1) auf der ersten Separatorbahn (34.1).

8. Batteriezellstapelherstellverfahren nach einem der voranstehenden Ansprüche, **dadurch gekennzeichnet, dass**
8.1 die ersten Elektroden (36.1) Anoden und die zweiten Elektroden (36.2) Kathoden sind oder
8.2 die ersten Elektroden (36.1) Kathoden und die zweiten Elektroden (36.2) Anoden sind.

9. Batteriezellstapelherstellvorrichtung (20) zum Herstellen von Batteriezellstapeln (22), umfassend:
eine computergesteuerte erste Elektrodenstrangherstelleinrichtung (28.1) zum Herstellen eines ersten Elektrodenstrangs (32.1), die dazu ausgebildet ist, an einer ersten Separatorbahn (34.1) erste Elektroden (36.1) im vorbestimmten Abstand zueinander zu befestigen, um eine Reihe aufeinanderfolgender erster Elektrodenhalbzellabschnitte mit einer vorbestimmten Länge zu bilden, so dass jeder erste Elektrodenhalbzellabschnitt aus einem Längenabschnitt der ersten Separatorbahn (34.1) und einer ersten Elektrode (36.1) gebildet ist,
eine computergesteuerte zweite Elektrodenstrangherstelleinrichtung (28.1) zum Herstellen eines zweiten Elektrodenstrangs (32.2), die dazu ausgebildet ist, an einer zweiten Separatorbahn (34.2) zweite Elektroden (36.2), die Gegenelektroden zu den ersten Elektroden (36.1) sind, in einem vorbestimmten Abstand zueinander zu befestigten, um eine Reihe von zweiten Elektrodenhalbzellabschnitten mit der gleichen vorbestimmten Länge wie die ersten Elektrodenhalbzellabschnitte zu bilden, so dass jeder zweite Elektrodenhalbzellabschnitt aus einem Längenabschnitt der zweiten Separatorbahn (34.2) und einer zweiten Elektrode (36.2) gebildet ist,
eine computergesteuerte Strangverbindungseinrichtung (30), die dazu ausgebildet ist, einen Zellverbundstrang (88) durch Ausrichten und aneinander Befestigen des ersten Elektrodenstrangs (32.1) und des zweiten Elektrodenstrangs (32.2) derart zu bilden, dass in aufeinanderfolgenden Längenabschnitten in dem Zellverbundstrang (88) jeweils ein erster Elektrodenhalbzellabschnitt und ein zweiter Elektrodenhalbzellabschnitt aufeinanderliegen, um eine Reihe von Monozellenbereiche zu bilden, die jeweils einen Schichtaufbau aus einem Längenabschnitt der einen der ersten und zweiten Separatorbahn (34.1, 34.2), der einen der ersten und zweiten Elektrode (36.1, 36.2), einem Längenabschnitt der anderen der ersten und zweiten Separatorbahn (34.1, 34.2) und der anderen der ersten und zweiten Elektrode (36.1, 36.2) aufweisen,
eine Zellverbund-Vereinzelungseinrichtung (90) zum Vereinzeln der Längenabschnitte des Zellverbundstrangs (88), um die Monozellenbereiche zu Monozellen (86) zu vereinzeln, die einen Schichtaufbau aus Separator (S), der einen der ersten und zweiten Elektrode (36.1, 36.2), Separator (S) und der anderen der ersten und zweiten Elektrode (36.1, 36.2) aufweisen, und
eine computergesteuerte Stapeleinrichtung (26), die dazu ausgebildet ist, mehrere Monozellen (86) aufeinander zu stapeln, um einen Batteriezellstapel (22) mit sich wiederholendem Schichtaufbau Separator (S) - eine der ersten und zweiten Elektrode (36.1, 36.2) - Separator (S) - andere der ersten und zweiten Elektrode (36.1, 36.2) zu bilden,
**dadurch gekennzeichnet,**
**dass** die zweite Elektrodenstrangherstelleinrichtung (28.2) dazu ausgebildet ist, eine zweite Elektrode (36.2) an mehreren Stellen wegzulassen, so dass jeweils ein Leerabschnitt mit der gleichen vorbestimmten Länge wie der erste Elektrodenhalbzellabschnitt entsteht, der aus einem Längenabschnitt der zweiten Separatorbahn (34.2) ohne zweite Elektrode gebildet ist,
**dass** die Strangverbindungseinrichtung (30) dazu ausgebildet ist, jeden Leerabschnitt mit einem ersten Elektrodenhalbzellabschnitt auszurichten, so dass in dem Zellverbundstrang (88) an den mehreren Stellen jeweils ein Abschlusszellenbereich entsteht, der einen Schichtaufbau aus dem Längenabschnitt der ersten Separatorbahn (34.1), der ersten Elektrode (36.1) und dem Längenabschnitt der zweiten Separatorbahn (34.2), jedoch keine zweite Elektrode aufweist,
**dass** die Zellverbund-Vereinzelungseinrichtung (90) dazu ausgebildet ist, die Abschlusszellenbereiche von dem Zellverbundstrang (88) zu vereinzeln, um Abschlusszellen (100) zu erhalten, die einen Schichtaufbau aus Separator (S), erster Elektrode (36.1) und Separator (S) aufweist, und
**dass** die Stapeleinrichtung (26) dazu ausgebildet ist, das Stapeln jedes Zellstapels (22) mit einer Abschlusszelle (100) zu beginnen oder zu beenden, so dass jeder Batteriezellstapel (22) an jedem Ende mit einer ersten Elektrode (36.1) und einem Separator (S) abschließt.

10. Batteriezellstapelherstellvorrichtung (20) nach Anspruch 9, **dadurch gekennzeichnet,**
**dass** die Stapeleinrichtung (26)
10.1 mehrere Stapelplätze (92) aufweist, die in einer Transportrichtung der Mono- und Abschlusszellen (86, 100) hintereinander angeordnet sind und/oder
10.2 eine Zellenerfassungs- und -zähleinrichtung (98) zum Erfassen der Anzahl von Zellen (86, 100) an einem oder mehreren Stapelplätzen (92) aufweist.

11. Batteriezellstapelherstellvorrichtung (20) nach einem der Ansprüche 9 oder 10, **dadurch gekennzeichnet**,
11.1 dass die zweite Elektrodenstrangherstelleinrichtung (28.1) ausgebildet ist zum
• flexiblen Erzeugen eines Leerabschnittes auf einen Steuerbefehl hin; und/oder
• Erzeugen von Leerabschnitten abhängig von einer Anzahl von Zellen (86, 100) in einem oder mehreren der durch die Stapeleinrichtung (26) gebildeten Batteriezellstapeln (22); und/oder
• Erzeugen von Leerabschnitten abhängig von einem Füllgrad von Stapelplätzen (92) der Stapeleinrichtung (26).
und/oder
11.2 dass die erste Elektrodenstrangherstelleinrichtung (28.1) eine erste Elektrodenbahnliefereinrichtung zum Anliefern eines bahnförmigen Erste-Elektrodensubstrats (50.1) aufweist und die zweite Elektrodenstrangherstelleinrichtung (28.2) eine zweite Elektrodenbahnliefereinrichtung zum Anliefern eines bahnförmigen Zweite-Elektrodensubstrats (50.2) aufweist, wobei die erste Elektrodenstrangherstelleinrichtung (28.1) und die zweite Elektrodenstrangherstelleinrichtung (28.2) derart gesteuert sind, dass das Erste-Elektrodensubstrat (50.1) mit einer höheren Geschwindigkeit als das Zweite-Elektrodensubstrat (50.2) angeliefert wird.

12. Batteriezellstapelherstellvorrichtung (20) nach einem der Ansprüche 9 bis 11, **dadurch gekennzeichnet,**
**dass** die zweite Elektrodenstrangherstelleinrichtung (28.1) ein flexibles Zweite-Elektroden-Transportsystem (40.2) mit entlang einer Führungsbahn (60) einzeln bewegbaren Transporteinheiten (62) zum Transportieren jeweils einer zweiten Elektrode (36.2) aufweist und dazu eingerichtet ist, einen Leerabschnitt durch Zurückhalten einer Transporteinheit (62) zu bilden.

13. Batteriezellstapelherstellvorrichtung (20) nach einem der Ansprüche 9 bis 12, **dadurch gekennzeichnet**,
13.1 dass die zweite Elektrodenstrangherstelleinrichtung (28.2) umfasst:
eine Zweite-Elektrodensubstratbereitstelleinrichtung (38.2) zum Bereitstellen eines bahnförmigen Zweite-Elektrodensubstrats (50.2);
ein Zweite-Elektroden-Transportsystem (40.2), das entlang einer Führungsbahn (60) einzeln bewegbare Transporteinheiten (62) aufweist, wobei das Zweite-Elektroden-Transportsystem (40.2) dazu eingerichtet ist, das von der Zweite-Elektrodensubstratbereitstelleinrichtung (38.2) bereitgestellte bahnförmige Zweite-Elektrodensubstrat (50.2) aufzunehmen und zu bewegen;
eine Zweite-Elektroden-Schneideinrichtung (40.2) zum Schneiden des Zweite-Elektrodensubstrats (50.2) entlang einer Schneidkontur, um zweite Elektroden (36.2) von dem Zweite-Elektrodensubstrat (50.2) abzuschneiden;
eine Zweite-Separatorbahnbereitstelleinrichtung (44.2) zum Bereitstellen der zweiten Separatorbahn (34.2); und
eine Zweite-Elektroden-Aufbring- und Fixiereinrichtung (46.2) zum Aufbringen und Fixieren von mittels des Zweite-Elektroden-Transportsystems (40.2) relativ zueinander positioniert angelieferten zweiten Elektroden (36.2) auf der zweiten Separatorbahn (34.2); und/oder
13.2 dass die erste Elektrodenstrangherstelleinrichtung (28.1) umfasst:
eine Erste-Elektrodensubstratbereitstelleinrichtung (38.1) zum Bereitstellen eines bahnförmigen Erste-Elektrodensubstrats (50.1);
ein Erste-Elektroden-Transportsystem (40.1), das entlang einer Führungsbahn (60) einzeln bewegbare Transporteinheiten (62) aufweist, wobei das Erste-Elektroden-Transportsystem (40.1) dazu eingerichtet ist, das von der Erste-Elektrodensubstratbereitstelleinrichtung (38.1) bereitgestellte bahnförmige Erste-Elektrodensubstrat (50.1) aufzunehmen und zu bewegen;
eine Erste-Elektroden-Schneideinrichtung (42.1) zum Schneiden des Erste-Elektrodensubstrats (50.1) entlang einer Schneidkontur, um erste Elektroden (36.1) von dem Erste-Elektrodensubstrat (50.1) abzuschneiden;
eine Erste-Separatorbahnbereitstelleinrichtung (44.1) zum Bereitstellen der ersten Separatorbahn (34.1); und
eine Erste-Elektroden-Aufbring- und Fixiereinrichtung (46.1) zum Aufbringen und Fixieren von mittels des Erste-Elektroden-Transportsystems (42.1) relativ zueinander positioniert angelieferten ersten Elektroden (36.1) auf der ersten Separatorbahn (34.1).

14. Batteriezellstapelherstellvorrichtung (20) nach einem der Ansprüche 9 bis 13, umfassend eine Steuerung (80), die dazu eingerichtet ist, die Batteriezellstapelherstellvorrichtung (20) zum Durchführen des Batteriezellstapelherstellverfahrens nach einem der Ansprüche 1 bis 8 anzusteuern.

15. Computerprogramm umfassend Anweisungen, die eine Batteriezellstapelherstellvorrichtung (20) nach einem der Ansprüche 9 bis 14 veranlassen, das Batteriezellstapelherstellverfahren nach einem der Ansprüche 1 bis 8 durchzuführen.

## Claims

1. Battery cell stack production method for the production of battery cell stacks (22), the method comprising:
a) producing a first electrode string (32.1), wherein first electrodes (36.1) are fixed to a first separator web (34.1) at a predetermined distance from each other to form a series of successive first electrode half-cell sections having a predetermined length such that each first electrode half-cell section is formed of a length section of the first separator web (34.1) and a first electrode (36.1),
b) producing a second electrode string (32.2), wherein second electrodes (36.2), which are counter-electrodes to the first electrodes (36. 1), are fixed on a second separator web (34.2) at a predetermined distance from each other to form a series of second electrode half-cell sections having the same predetermined length as the first electrode half-cell sections, so that each second electrode half-cell section is formed of a length section of the second separator web (34.2) and a second electrode (36.2),
c) forming a cell composite string (88) by aligning and attaching the first electrode string (32.1) and the second electrode string (32.2) to each other such that in successive length sections in the cell composite string (88) a first electrode half-cell section and a second electrode half-cell section are superimposed to form a series of mono-cell regions each having a layered structure of a length section of one of the first and second separator webs (34. 1, 34.2), one of the first and second electrodes (36.1, 36.2), a length section of the other of the first and second separator webs (34.1, 34.2) and the other of the first and second electrodes (36.1, 36.2),
d) separating the length sections of the cell composite string (88) to separate the mono-cell regions into mono-cells (86) having a layered structure of separator (S), one of the first and second electrodes (36.1, 36.2), separator (S) and the other of the first and second electrodes (36.1, 36.2), and
e) stacking a plurality of mono-cells (86) on top of each other to form a battery cell stack (22) having a repeating layered structure of separator (S) - one of the first and second electrodes (36.1, 36.2) - separator (S) - other of the first and second electrodes (36.1, 36.2), **characterized in**
**that** step b) comprises:
b1) omitting a second electrode (36.2) at several locations, so that in each case an empty section with the same predetermined length as the first electrode half-cell section is produced which is formed of a length section of the second separator web (34.2) without a second electrode,
**that** step c) comprises:
c1) aligning each empty section with a first electrode half-cell section, so that a terminal cell region is formed in the cell composite string at each of the plurality of locations which has a layered structure of the length section of the first separator web (34.1), the first electrode (36.1) and the length section of the second separator web (34.2), but no second electrode (36.2),
**that** step d) comprises:
d1) separating the terminal cell regions from the cell composite string (88) to obtain terminal cells (100) having a layered structure of separator (S), first electrode (36.1) and separator (S),
and in that step e) comprises:
beginning or terminating stacking with a terminal cell (100) obtained in step d1), so that each battery cell stack (22) terminates at each end with a first electrode (36.1) and a separator (S).

2. Battery cell stack production method according to claim 1, **characterized in that** step e) comprises at least one or more of the steps:
e1) forming a plurality of battery cell stacks (22) at a plurality of stacking locations (92) arranged one behind the other in a transport direction of the mono and terminal cells (86, 100);
e2) beginning each battery cell stack (22) with a terminal cell (100);
e3) detecting the number of cells (86, 100) at each stacking location (92).

3. Battery cell stack production method according to any one of the preceding claims, **characterized in**
**that** step b1) comprises at least one or more of the steps:
b1a) flexibly generating an empty section in response to a control command;
b1b) generating empty sections depending on a number of cells (86, 100) in one or more of the battery cell stacks (22) created in step e);
b1c) generating empty sections depending on a filling level of stacking locations (92).

4. Battery cell stack production method according to any one of the preceding claims, **characterized in**
**that** step b) comprises providing the second electrodes (36.2) by separating them from a web-shaped second-electrode substrate (50.2) and that step a) comprises providing the first electrodes (36.1) by separating them from a web-shaped first-electrode substrate (50. 1) and that a speed at which the web-like second-electrode substrate (50.2) is delivered to provide the second electrodes (36.2) is lower than a speed at which the web-like first-electrode substrate (50.1) is delivered to provide the first electrodes (36.1).

5. Battery cell stack production method according to any one of the preceding claims, **characterized in**
**that** step b) comprises:
b2) providing the second electrodes (36.2) by means of a flexible second-electrode transport system (40.2) which has transport units (62) which can be moved individually along a guide track (60) and on each of which a second electrode (36.2) is transported, and in that step b1) comprises:
b2.1) holding back a transport unit (62) to form the empty section.

6. Battery cell stack production method according to claim 5, **characterized in that** step b) comprises the following sequence of steps:
b-a) providing a web-shaped second-electrode substrate (50.2);
b-b) picking up the web-shaped second-electrode substrate (50.2) by means of the second-electrode transport system (40.2) and transporting the second-electrode substrate (50.2) to a second-electrode cutting device (42.2);
b-c) cutting the web-shaped second-electrode substrate (50.2) in the second-electrode cutting device (42.2) to cut off second electrodes (36.2), each of which is individually arranged on one of the transport units (62);
b-d) adjusting a distance between cut second electrodes (36.2) by means of relative movement of the transport units (62) to position the second electrodes (36.2) relative to each other;
b-e) providing the second separator web (34.2);
b-f) applying and fixing the second electrodes (36.2) positioned relative to each other to the second separator web (34.2).

7. Battery cell stack production method according to any one of the preceding claims, **characterized in**
**that** step a) comprises the following sequence of steps:
a-a) providing a web-shaped first-electrode substrate (50.1);
a-b) picking up the web-shaped first-electrode substrate (50.1) by means of a flexible first-electrode transport system (40.1) which has transport units (62) that can be moved individually along a guide track (60), and transporting the first-electrode substrate (50.1) to a first-electrode cutting device (42.1);
a-c) cutting the web-shaped first-electrode substrate (50.1) in the first-electrode cutting device (42.1) to cut off first electrodes (36.1), each of which is individually arranged on one of the transport units (62) of the first-electrode transport system (40.1);
a-d) adjusting a distance between cut first electrodes (36.1) by means of relative movement of the transport units (62) to position the first electrodes (36.1) relative to each other;
a-e) providing the first separator web (34.1);
a-f) applying and fixing the first electrodes (36.1) positioned relative to each other to the first separator web (34.1).

8. Battery cell stack production method according to any one of the preceding claims, **characterized in that**
8.1 the first electrodes (36.1) are anodes and the second electrodes (36.2) are cathodes, or
8.2 the first electrodes (36.1) are cathodes and the second electrodes (36.2) are anodes.

9. Battery cell stack production device (20) for the production of battery cell stacks (22), the device comprising:
a computer-controlled first electrode string production device (28.1) for producing a first electrode string (32.1) which is configured to attach to a first separator web (34.1) first electrodes (36.1) at a predetermined distance from one another to form a series of successive first electrode half-cell sections of a predetermined length, so that each first electrode half-cell section is formed of a length section of the first separator web (34.1) and a first electrode (36.1),
a computer-controlled second electrode string production device (28.1) for producing a second electrode string (32.2) which is configured to attach to a second separator web (34.2) second electrodes (36.2), which are counter-electrodes to the first electrodes (36. 1), at a predetermined distance from each other to form a series of second electrode half-cell sections having the same predetermined length as the first electrode half-cell sections, so that each second electrode half-cell section is formed of a length section of the second separator web (34.2) and a second electrode (36.2),
a computer-controlled string connecting device (30) which is configured to form a cell composite string (88) by aligning and attaching the first electrode string (32.1) and the second electrode string (32. 2) in such a way that a first electrode half-cell section and a second electrode half-cell section are superimposed in successive length sections in the cell composite string (88) in order to form a series of mono-cell regions each of which has a layer structure comprising a length section of one of the first and second separator webs (34. 1, 34.2), one of the first and second electrodes (36.1, 36.2), a length section of the other of the first and second separator webs (34.1, 34.2) and the other of the first and second electrodes (36.1, 36.2),
a cell composite separating device (90) for separating the length sections of the cell composite string (88) to separate the mono-cell regions into mono-cells (86) having a layered structure of separator (S), one of the first and second electrodes (36.1, 36.2), separator (S) and the other of the first and second electrodes (36.1, 36.2), and
a computer-controlled stacking device (26) configured to stack a plurality of mono-cells (86) on top of each other to form a battery cell stack (22) having a repeating layered structure of separator (S) - one of the first and second electrodes (36.1, 36.2) - separator (S) - other of the first and second electrodes (36.1, 36.2),
**characterized in**
**that** the second electrode string production device (28.2) is configured to omit a second electrode (36.2) at a plurality of locations, so that in each case an empty section with the same predetermined length as the first electrode half-cell section is created which is formed of a length section of the second separator web (34.2) without a second electrode,
**that** the string connecting device (30) is configured to align each empty section with a first electrode half-cell section, so that in the cell composite string (88) a terminal cell region is produced at each of the multiple locations which has a layered structure of the length section of the first separator web (34.1), the first electrode (36.1) and the length section of the second separator web (34.2), but no second electrode,
**that** the cell composite separating device (90) is configured to separate the terminal cell regions from the cell composite string (88) in order to obtain terminal cells (100) which have a layered structure of separator (S), first electrode (36.1) and separator (S), and
in that the stacking device (26) is configured to begin or terminate the stacking of each cell stack (22) with a terminal cell (100), so that each battery cell stack (22) terminates at each end with a first electrode (36.1) and a separator (S).

10. Battery cell stack production device (20) according to claim 9, **characterized in that** the stacking device (26)
10.1 has a plurality of stacking locations (92) which are arranged one behind the other in a transport direction of the mono and terminal cells (86, 100) and/or
10.2 has a cell detection and counting device (98) for detecting the number of cells (86, 100) at one or more stacking locations (92).

11. Battery cell stack production device (20) according to any one of claims 9 or 10, **characterized in that**
11.1 the second electrode string production device (28.1) is configured to
• flexibly generate an empty section in response to a control command; and/or
• generate empty sections depending on a number of cells (86, 100) in one or more of the battery cell stacks (22) formed by the stacking device (26); and/or
• generate empty sections depending on a filling level of stacking locations (92) of the stacking device (26).
and/or
11.2 **in that** the first electrode string production device (28.1) has a first electrode web delivery device for delivering a web-shaped first-electrode substrate (50.1) and the second electrode string production device (28.2) has a second electrode web delivery device for delivering a web-shaped second-electrode substrate (50. 2), wherein the first electrode string production device (28.1) and the second electrode string production device (28.2) are controlled such that the first-electrode substrate (50.1) is delivered at a higher speed than the second-electrode substrate (50.2).

12. Battery cell stack production device (20) according to any one of claims 9 to 11, **characterized in**
**that** the second electrode stack production device (28.1) comprises a flexible second-electrode transport system (40.2) with transport units (62) individually movable along a guide track (60) for transporting a second electrode (36.2) in each case and is configured to form an empty section by holding back a transport unit (62).

13. Battery cell stack production device (20) according to any one of claims 9 to 12, **characterized in that**
13.1 the second electrode string production device (28.2) comprises:
a second-electrode substrate providing device (38.2) for providing a web-shaped second-electrode substrate (50.2);
a second-electrode transport system (40.2) comprising transport units (62) individually movable along a guide track (60), wherein the second-electrode transport system (40.2) is configured to pick up and move the web-shaped second-electrode substrate (50.2) provided by the second-electrode substrate providing device (38.2);
a second-electrode cutting device (40.2) for cutting the second-electrode substrate (50.2) along a cutting contour to cut second electrodes (36.2) from the second-electrode substrate (50.2);
a second-separator web providing device (44.2) for providing the second-separator web (34.2); and
a second-electrode applying and fixing device (46.2) for applying and fixing second electrodes (36.2) delivered by means of the second-electrode transport system (40.2) positioned relative to each other to the second separator web (34.2); and/or
13.2 the first electrode string production device (28.1) comprises:
a first-electrode substrate providing device (38.1) for providing a web-shaped first-electrode substrate (50.1);
a first-electrode transport system (40.1) having transport units (62) individually movable along a guide track (60), wherein the first-electrode transport system (40.1) is configured to pick up and move the web-shaped first-electrode substrate (50.1) provided by the first-electrode substrate providing device (38.1);
a first-electrode cutting device (42.1) for cutting the first-electrode substrate (50.1) along a cutting contour to cut first electrodes (36.1) from the first-electrode substrate (50.1);
a first-separator web providing device (44.1) for providing the first-separator web (34.1); and
a first-electrode applying and fixing device (46.1) for applying and fixing first electrodes (36.1) supplied by means of the first-electrode transport system (42.1) in a manner positioned relative to each other to the first separator web (34.1).

14. Battery cell stack production device (20) according to any one of claims 9 to 13, comprising a controller (80) adapted to control the battery cell stack production device (20) to perform the battery cell stack production method according to any one of claims 1 to 8.

15. Computer program comprising instructions that cause a battery cell stack production apparatus (20) according to any one of claims 9 to 14 to perform the battery cell stack production method according to any one of claims 1 to 8.

## Revendications

1. Procédé de fabrication d'empilements de cellules de batterie pour la production d'empilements de cellules de batterie (22), le procédé comprenant:
a) la production d'une première chaîne d'électrodes (32.1), dans laquelle des premières électrodes (36.1) sont fixées à une première bande séparatrice (34.1) à une distance prédéterminée les unes des autres pour former une série de premières sections d'électrodes à demi-cellule successives ayant une longueur prédéterminée de telle sorte que chaque première section d'électrodes à démi-cellule est formée d'un segment de longueur de la première bande séparatrice (34.1) et d'une première électrode (36.1),
b) la production d'une deuxième chaîne d'électrodes (32.2), dans laquelle des deuxièmes électrodes (36.2), qui sont des contre-électrodes aux premières électrodes (36.1), sont fixées sur une deuxième bande séparatrice (34.2) à une distance prédéterminée les unes des autres pour former une série de deuxièmes sections d'électrodes à demi-cellule ayant la même longueur prédéterminée que les premières sections d'électrodes à demi-cellule, de sorte que chaque deuxième section d'électrode à demi-cellule est formée d'un segment de longueur de la deuxième bande séparatrice (34.2) et d'une deuxième électrode (36.2),
c) la formation d'une chaîne composite de cellules (88) en alignant et en fixant la première chaîne d'électrode (32.1) et la deuxième chaîne d'électrode (32.2) l'une à l'autre de telle sorte que, dans des segments de longueur successifs de la chaîne composite de cellules (88), une première section d'électrodes à demi-cellules et une deuxième section d'électrodes à demi-cellules se superposent pour former une série de régions de monocellules ayant chacune une structure stratifiée composée d'un segment de longueur de l'une des première et deuxième bandes séparatrices (34.1, 34.2), de l'une des première et deuxième électrodes (36.1, 36.2), un segment de longueur de l'autre des première et deuxième bandes séparatrices (34.1, 34.2) et de l'autre des première et deuxième électrodes (36.1, 36.2),
d) séparer les segments de longueur de la chaîne composite de cellules (88) afin de séparer les régions de cellules mono en cellules mono (86) ayant une structure stratifiée composée d'un séparateur (S), de l'une des première et deuxième électrodes (36.1, 36.2), d'un séparateur (S) et de l'autre des première et deuxième électrodes (36.1, 36.2), et
e) l'empilement d'une pluralité de cellules mono (86) les unes sur les autres pour former une pile de cellules de batterie (22) ayant une structure stratifiée répétitive de séparateur (S) - l'une des première et deuxième électrodes (36.1, 36.2) - séparateur (S) - l'autre des première et deuxième électrodes (36.1, 36.2),
**caractérisé en ce que**
l'étape b) comprend:
b1) omettre une deuxième électrode (36.2) à multiples emplacements, de sorte que dans chaque cas, une section vide de même longueur prédéterminée que la première section d'électrode à demi-cellule est produite, qui est formée d'un segment de longueur de la deuxième bande séparatrice (34.2) sans deuxième électrode,
l'étape c) comprend:
c1) aligner chaque section vide avec une première section d'électrode à de demi-cellule, de sorte qu'une région de cellule terminale est formée dans la chaîne composite de cellules à chacun des multiples emplacements, laquelle chaîne composite présente une structure stratifiée composée du segment de longueur de la première bande séparatrice (34.1), de la première électrode (36.1) et du segment de longueur de la deuxième bande séparatrice (34.2), mais sans deuxième électrode (36.2),
l'étape d) comprend:
d1) séparer les régions de cellules terminales de la chaîne composite de cellules (88) pour obtenir des cellules terminales (100) ayant une structure stratifiée composée du séparateur (S), de la première électrode (36.1) et du séparateur (S),
et **en ce que** l'étape e) comprend:
commencer ou terminer l'empilement avec une cellule terminale (100) obtenue à l'étape d1), de sorte que chaque pile de cellules de batterie (22) se termine à chaque extrémité par une première électrode (36.1) et un séparateur (S).

2. Procédé de fabrication d'empilements de cellules de batterie selon la revendication 1, **caractérisé en ce que** l'étape e) comprend au moins une ou plusieurs des étapes suivantes:
e1) former une pluralité de piles de cellules de batterie (22) à une pluralité d'emplacements d'empilement (92) disposés les uns derrière les autres dans une direction de transport des cellules mono et terminales (86, 100);
e2) commencer chaque pile de cellules de batterie (22) par une cellule terminale (100);
e3) détecter le nombre de cellules (86, 100) à chaque emplacement d'empilement (92).

3. Procédé de fabrication d'empilements de cellules de batterie selon l'une quelconque des revendications précédentes, **caractérisé en ce que** l'étape b1) comprend au moins une ou plusieurs des étapes suivantes:
b1a) générer de manière flexible une section vide en réponse à une commande de contrôle;
b1b) générer des sections vides en fonction d'un nombre de cellules (86, 100) dans une ou plusieurs des piles de cellules de batterie (22) créées à l'étape e);
b1c) générer des sections vides en fonction d'un niveau de remplissage des emplacements d'empilement (92).

4. Procédé de fabrication d'empilements de cellules de batterie selon l'une quelconque des revendications précédentes, **caractérisé en ce que**
l'étape b) comprend la fourniture des deuxièmes électrodes (36.2) en les séparant d'un substrat de deuxième électrode en forme de bande (50.2) et **en ce que** l'étape a) comprend la fourniture des premières électrodes (36.1) en les séparant d'un substrat de première électrode en forme de bande (50.1) et **en ce que** la vitesse à laquelle le substrat de deuxième électrode en forme de bande (50.2) est délivré pour fournir les deuxièmes électrodes (36.2) est inférieure à la vitesse à laquelle le substrat de première électrode en forme de bande (50.1) est délivré pour fournir les premières électrodes (36.1).

5. Procédé de fabrication d'empilements de cellules de batterie selon l'une quelconque des revendications précédentes, **caractérisé en ce que**
l'étape b) comprend:
b2) la fourniture des deuxièmes électrodes (36.2) au moyen d'un système de transport de deuxièmes électrodes flexible (40.2) qui comporte des unités de transport (62) pouvant être déplacées individuellement le long d'une voie de guidage (60) et sur chacune desquelles une seconde électrode (36.2) est transportée,
et **en ce que** l'étape b1) comprend:
b2.1) retenir une unité de transport (62) pour former la section vide.

6. Procédé de fabrication d'empilements de cellules de batterie selon la revendication 5, **caractérisé en ce que** l'étape b) comprend la séquence d'étapes suivante:
b-a) fournir un substrat de deuxième électrode en forme de bande (50.2);
b-b) saisir le substrat de deuxième électrode en forme de bande (50.2) au moyen du système de transport de deuxième électrode (40.2) et transporter le substrat de deuxième électrode (50.2) vers un dispositif de découpe de deuxième électrode (42.2);
b-c) découper le substrat de deuxième électrode en forme de bande (50.2) dans le dispositif de découpe de deuxième électrode (42.2) afin de découper des deuxièmes électrodes (36.2), chacune d'entre elles étant disposée individuellement sur l'une des unités de transport (62);
b-d) ajuster la distance entre les deuxièmes électrodes découpées (36.2) au moyen d'un mouvement relatif des unités de transport (62) afin de positionner les deuxièmes électrodes (36.2) les unes par rapport aux autres;
b-e) fournir la seconde bande séparatrice (34.2);
b-f) appliquer et fixer les deuxièmes électrodes (36.2) positionnées les unes par rapport aux autres sur la seconde bande séparatrice (34.2).

7. Procédé de fabrication d'empilements de cellules de batterie selon l'une quelconque des revendications précédentes, **caractérisé en ce que**
l'étape a) comprend la séquence d'étapes suivante:
a-a) fournir un substrat de première électrode en forme de bande (50.1);
a-b) saisir le substrat de première électrode en forme de bande (50.1) au moyen d'un système de transport de première électrode flexible (40.1) qui comporte des unités de transport (62) pouvant être déplacées individuellement le long d'une voie de guidage (60), et transporter le substrat de première électrode (50.1) vers un dispositif de découpe de première électrode (42.1);
a-c) découper le substrat de première électrode en forme de bande (50.1) dans le dispositif de découpe de première électrode (42.1) afin de découper des premières électrodes (36.1), chacune d'entre elles étant disposée individuellement sur l'une des unités de transport (62) du système de transport de première électrode (40.1);
a-d) ajuster une distance entre les premières électrodes découpées (36.1) au moyen d'un mouvement relatif des unités de transport (62) afin de positionner les premières électrodes (36.1) les unes par rapport aux autres;
a-e) fournir la première bande séparatrice (34.1);
a-f) appliquer et fixer les premières électrodes (36.1) positionnées les unes par rapport aux autres sur la première bande séparatrice (34.1).

8. Procédé de fabrication d'empilements de cellules de batterie selon l'une quelconque des revendications précédentes, **caractérisé en ce que**
8.1 les premières électrodes (36.1) sont des anodes et les deuxièmes électrodes (36.2) sont des cathodes ou
8.2 les premières électrodes (36.1) sont des cathodes et les deuxièmes électrodes (36.2) sont des anodes.

9. Dispositif de fabrication d'empilements de cellules de batterie (20) pour la fabrication de piles de cellules de batterie (22), le dispositif comprenant:
un premier dispositif de production de chaînes d'électrodes (28.1) commandé par ordinateur pour produire une première chaîne d'électrodes (32.1) qui est configuré pour fixer à une première bande séparatrice (34.1) des premières électrodes (36.1) à une distance prédéterminée les unes des autres afin de former une série de sections de demi-cellules à première électrode successives d'une longueur prédéterminée, de sorte que chaque section de demi-cellule à première électrode est formée d'une section de longueur de la première bande séparatrice (34.1) et d'une première électrode (36.1),
un deuxième dispositif de production de chaînes d'électrodes (28.1) commandé par ordinateur pour produire une deuxième chaîne d'électrodes (32.2) qui est configuré pour fixer à une deuxième bande séparatrice (34.2) des deuxièmes électrodes (36.2), qui sont des contre-électrodes aux premières électrodes (36. 1), à une distance prédéterminée les unes des autres pour former une série de sections de demi-cellules de deuxième électrode ayant la même longueur prédéterminée que les sections de demi-cellules de première électrode, de sorte que chaque section de demi-cellule de deuxième électrode est formée d'une section longitudinale de la deuxième bande séparatrice (34.2) et d'une deuxième électrode (36.2),
un dispositif de connexion de chaînes commandé par ordinateur (30) qui est configuré pour former une chaîne composite de cellules (88) en alignant et en fixant la chaîne de premières électrodes (32.1) et la chaîne de deuxièmes électrodes (32. 2) de telle manière qu'une première section de demi-cellule d'électrode et une deuxième section de demi-cellule d'électrode soient superposées dans des sections de longueur successives dans la chaîne composite de cellules (88) afin de former une série de régions de cellules mono dont chacune a une structure stratifiée comprenant une section de longueur de l'une des première et deuxième bandes séparatrices (34. 1, 34.2), l'une des première et deuxième électrodes (36.1, 36.2), une section longitudinale de l'autre des première et deuxième bandes séparatrices (34.1, 34.2) et de l'autre des première et deuxième électrodes (36.1, 36.2),
un dispositif de séparation composite de cellules (90) pour séparer les sections longitudinales de la chaîne composite de cellules (88) afin de séparer les régions de cellules individuelles en cellules individuelles (86) ayant une structure stratifiée de séparateur (S), l'une des première et deuxième électrodes (36.1, 36.2), séparateur (S) et l'autre des première et deuxième électrodes (36.1, 36.2), et
un dispositif d'empilage commandé par ordinateur (26) configuré pour empiler une pluralité de cellules mono (86) les unes sur les autres afin de former une pile de cellules de batterie (22) ayant une structure stratifiée répétitive de séparateur (S) - l'une des première et deuxième électrodes (36.1, 36.2) - séparateur (S) - l'autre des première et deuxième électrodes (36.1, 36.2),
**caractérisé en ce que**
le dispositif de fabrication de chaînes de deuxième électrodes (28.2) est configuré pour omettre une seconde électrode (36.2) à une pluralité d'emplacements, de sorte que dans chaque cas, une section vide ayant la même longueur prédéterminée que la section de demi-cellule de première électrode est créée, laquelle est formée d'une section de longueur de la seconde bande séparatrice (34.2) sans deuxième électrode,
que le dispositif de connexion de chaînes (30) est configuré pour aligner chaque section vide avec une section de demi-cellule de première électrode, de sorte que dans la chaîne composite de cellules (88), une région de cellule terminale est produite à chacun des multiples emplacements, qui présente une structure stratifiée de la section longitudinale de la première bande séparatrice (34.1), la première électrode (36.1) et la section longitudinale de la deuxième bande séparatrice (34.2), mais sans deuxième électrode,
que le dispositif de séparation composite de cellules (90) est configuré pour séparer les régions de cellules terminales de la chaîne composite de cellules (88) afin d'obtenir des cellules terminales (100) qui ont une structure stratifiée de séparateur (S), une première électrode (36.1) et un séparateur (S), et
**en ce que** le dispositif d'empilage (26) est configuré pour commencer ou terminer l'empilage de chaque pile de cellules (22) avec une cellule terminale (100), de sorte que chaque pile de cellules de batterie (22) se termine à chaque extrémité par une première électrode (36.1) et un séparateur (S).

10. Dispositif de fabrication d'empilements de cellules de batterie (20) selon la revendication 9, **caractérisé en ce que** le dispositif d'empilage (26)
10.1 comporte une pluralité d'emplacements d'empilage (92) qui sont disposés les uns derrière les autres dans une direction de transport des cellules mono et terminales (86, 100) et/ou
10.2 comporte un dispositif de détection et de comptage de cellules (98) pour détecter le nombre de cellules (86, 100) à un ou plusieurs emplacements d'empilage (92).

11. Dispositif de fabrication d'empilements de cellules de batterie (20) selon l'une quelconque des revendications 9 ou 10, **caractérisé en ce que**
11.1 le dispositif de production de chaînes de deuxièmes électrodes (28.1) est configuré pour
• générer de manière flexible une section vide en réponse à une commande de contrôle ; et/ou
• générer des sections vides en fonction d'un nombre de cellules (86, 100) dans une ou plusieurs des piles de cellules de batterie (22) formées par le dispositif d'empilage (26); et/ou
• générer des sections vides en fonction d'un niveau de remplissage des emplacements d'empilage (92) du dispositif d'empilage (26).
et/ou
11.2 **en ce que** le premier dispositif de production de chaînes d'électrodes (28.1) comporte un premier dispositif de fourniture de bande d'électrodes pour fournir un substrat de première électrode en forme de bande (50.1) et le deuxième dispositif de production de chaînes d'électrodes (28.2) comporte un deuxième dispositif de fourniture de bande d'électrodes pour fournir un substrat de deuxième électrode en forme de bande (50.2), dans lequel le premier dispositif de production de chaîne d'électrodes (28.1) et le deuxième dispositif de production de chaîne d'électrodes (28.2) sont commandés de telle sorte que le substrat de première électrode (50.1) soit fourni à une vitesse supérieure à celle du substrat de deuxième électrode (50.2).

12. Dispositif de fabrication d'empilements de cellules de batterie (20) selon l'une quelconque des revendications 9 à 11, **caractérisé en ce que**
le deuxième dispositif de production de chaînes d'électrodes (28.1) comprend un système de transport de deuxièmes d'électrodes flexible (40.2) avec des unités de transport (62) pouvant être déplacées individuellement le long d'une voie de guidage (60) pour transporter une deuxième électrode (36.2) dans chaque cas et est configuré pour former une section vide en retenant une unité de transport (62).

13. Dispositif de fabrication d'empilements de cellules de batterie (20) selon l'une quelconque des revendications 9 à 12, **caractérisé en ce que**
13.1 le deuxième dispositif de production de chaînes d'électrodes (28.2) comprend:
un dispositif de fourniture de substrats de deuxième électrode (38.2) pour fournir un substrat de deuxième électrode en forme de bande (50.2) ;
un système de transport de deuxième électrode (40.2) comprenant des unités de transport (62) pouvant être déplacées individuellement le long d'une piste de guidage (60), dans lequel le système de transport de deuxième électrode (40.2) est configuré pour saisir et déplacer le substrat de deuxième électrode en forme de bande (50.2) fourni par le dispositif de fourniture de substrat de deuxième électrode (38.2) ;
un dispositif de découpe de deuxième électrode (40.2) pour découper le substrat de deuxième électrode (50.2) le long d'un contour de découpe afin de découper des deuxièmes électrodes (36.2) à partir du substrat de deuxième électrode (50.2);
un dispositif de fourniture de deuxième bande de séparateur (44.2) pour fournir la deuxième bande de séparateur (34.2); et
un dispositif d'application et de fixation de deuxième électrode (46.2) pour appliquer et fixer les deuxièmes électrodes (36.2) délivrées au moyen du système de transport de deuxième électrode (40.2) positionnées les unes par rapport aux autres sur la deuxième bande de séparation (34.2); et/ou
13.2 le premier dispositif de production de chaînes d'électrodes (28.1) comprend:
un dispositif de fourniture de substrats de première électrode (38.1) pour fournir un substrat de première électrode en forme de bande (50.1) ;
un système de transport de première électrode (40.1) comportant des unités de transport (62) pouvant être déplacées individuellement le long d'une voie de guidage (60), dans lequel le système de transport de première électrode (40.1) est configuré pour saisir et déplacer le substrat de première électrode en forme de bande (50.1) fourni par le dispositif de fourniture de substrat de première électrode (38.1) ;
un dispositif de découpe de première électrode (42.1) pour découper le substrat de première électrode (50.1) le long d'un contour de découpe afin de découper des premières électrodes (36.1) à partir du substrat de première électrode (50.1);
un dispositif de fourniture de première bande de séparateur (44.1) pour fournir la première bande de séparateur (34.1); et
un dispositif d'application et de fixation de première électrode (46.1) pour appliquer et fixer les premières électrodes (36.1) fournies par le système de transport de première électrode (42.1) de manière à les positionner les unes par rapport aux autres sur la première bande de séparation (34.1).

14. Dispositif de fabrication d'empilements de cellules de batterie (20) selon l'une quelconque des revendications 9 à 13, comprenant un dispositif de commande (80) adapté pour commander le dispositif de fabrication d'empilements de cellules de batterie (20) afin d'exécuter le procédé de fabrication d'empilements de cellules de batterie selon l'une quelconque des revendications 1 à 8.

15. Programme informatique comprenant des instructions qui amènent un dispositif de fabrication d'empilements de cellules de batterie (20) selon l'une quelconque des revendications 9 à 14 à exécuter le procédé de fabrication d'empilements de cellules de batterie selon l'une quelconque des revendications 1 à 8.
